(19) Europäisches Patentamt
European Patent Office
Office européen des brevets

(11) Veröffentlichungsnummer: **0 176 473 B1**

(12) # EUROPÄISCHE PATENTSCHRIFT

(45) Veröffentlichungstag der Patentschrift: **19.07.89**

(51) Int. Cl.⁴: **C 09 B 56/16**, D 06 P 1/08, D 21 H 3/80

(21) Anmeldenummer: **85810375.7**

(22) Anmeldetag: **16.08.85**

(54) **Methinazoverbindungen.**

(30) Priorität: **22.08.84 CH 4018/84**

(43) Veröffentlichungstag der Anmeldung: **02.04.86 Patentblatt 86/14**

(45) Bekanntmachung des Hinweises auf die Patenterteilung: **19.07.89 Patentblatt 89/29**

(84) Benannte Vertragsstaaten: **CH DE FR GB IT LI SE**

(56) Entgegenhaltungen:
**FR-A- 1 257 255**
**GB-A- 984 905**

(73) Patentinhaber: **CIBA-GEIGY AG**
**Klybeckstrasse 141**
**CH-4002 Basel (CH)**

(72) Erfinder: **Möckli, Peter, Dr.**
**Sandgrubenstrasse 13**
**CH-4124 Schönenbuch (CH)**

**EP 0 176 473 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Methinazoverbindungen, Verfahren zu deren Herstellung und deren Verwendung als Farbstoffe zum Färben und Bedrucken von kationisch färbbaren Substraten, vor allem von Papier.

Die erfindungsgemässen neuen Verbindungen entsprechen den Formeln

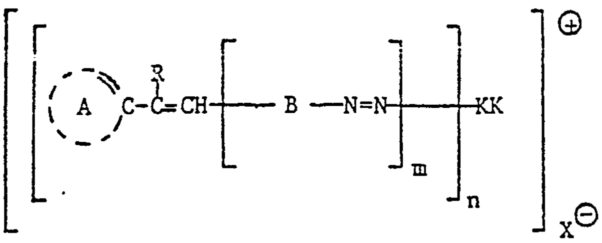

(I)

und

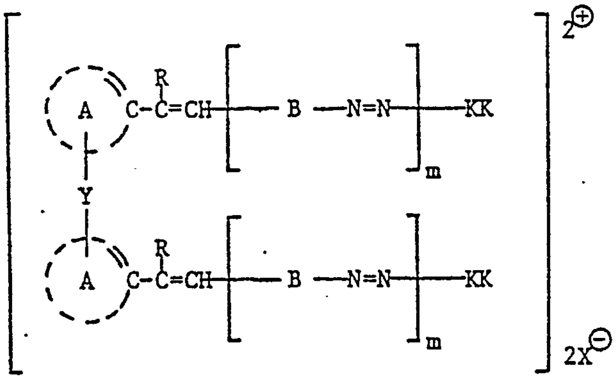

(Ia)

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert und/oder mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbinden ist,

B gegebenenfalls substituiertes Phenylen oder Naphthylen,

m und n unabhängig voneinander die Zahlen 1 oder 2, wobei in Formel (I) mindestens eines der beiden Symbole m und n für die Zahl 2 steht, wobei im Falle m = 2 die beiden B gleich oder verschieden sind,

KK den Rest einer Kupplungskomponente,

$X^{\ominus}$ ein Anion und Y ein Brückenglied bedeuten.

A bedeutet zusammen mit der Konfiguration ≥C- einen heterocyclischen 5- oder 6-gliedrigen Ring, der ein quaterniertes N-Atom als Ringglied enthält. Dieser Ring kann auch noch weitere Heteroatome (N, O, S) enthalten, beispielsweise eines oder zwei, insbesondere eines. An diesen Ring können eine oder mehrere heterocyclische oder vorzugsweise carbocyclische Ringe ankondensiert sein, insbesondere ein Benzo- oder Naphthoring. Die genannten Ringe bzw. Ringsysteme können auch, abgesehen vom Substituenten des N-Atoms, der zur Quaternierung desselben führt, auch noch weitere Substituenten tragen. Beispiele für derartige Substituenten sind Nitro, Halogen, Cyano, $C_1$-$C_4$-Alkyl, $C_1$-$C_4$-Alkoxy, Acetylamino und Dimethylamino. Der Substituent am quaternierten Stickstoffatom kann beispielsweise Phenyl, $C_1$-$C_8$-Alkyl, $C_2$-$C_8$-Alkenyl oder $C_3$-$C_6$-Cycloalkyl bedeuten, wobei die Alkyl-, Alkenyl- oder Cycloalkylkette durch Sauerstoff- oder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann.

Beispielsweise bedeutet A die Ergänzung zu einem gegebenenfalls mit carbocyclischen Ringen, vorzugsweise mit einem Benzo- oder Naphthoring, kondensierten Pyrimidin-, Pyridin-, Chinolin-, Thiazol-, Imidazol-, Oxazol- oder Pyrrolring, welche Ringe am N-Atom quaterniert sind und gegenenfalls weiter substituiert sind. Beispiele für Substituenten am quaternierten N-Atom und für zusätzliche Substituenten sind im vorstehenden Absatz angeführt.

Insbesondere bedeutet A die Ergänzung zu einem quaternierten, gegebenenfalls substituierten oder/und mit carbocyclischen Ringen kondensierten Pyridinring.

In praktisch wichtigen Verbindungen der Formeln (I) und (Ia) bedeutet A die Ergänzung zu einem der folgenden Ringe :

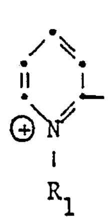 , 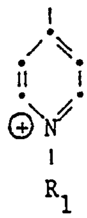 , 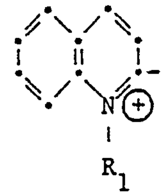 , 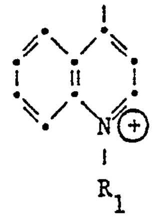 , 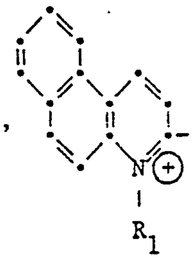

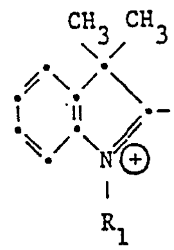 , 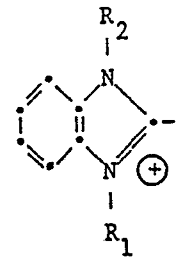 , 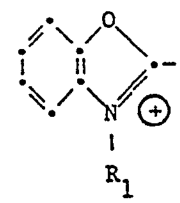 , 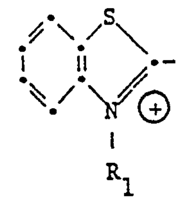

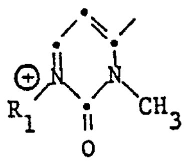 , 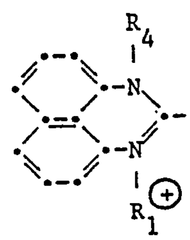 , 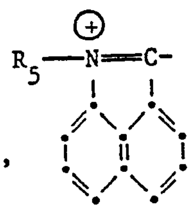 oder 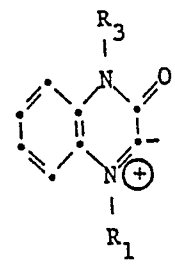

wobei diese Ringe neben den Substituenten $R_1$-$R_5$ noch durch Nitro, Halogen, Cyano, $C_1$-$C_4$-Alkyl, $C_1$-$C_4$-Alkoxy, Acetylamino oder Dimethylamino substituiert sein können und worin $R_1$, $R_2$, $R_3$ und $R_4$ unabhängig voneinander $C_1$-$C_8$-Alkyl, $C_2$-$C_8$-Alkenyl oder $C_3$-$C_6$-Cycloalkyl bedeuten, wobei die Alkyl-, Alkenyl- oder Cycloalkylkette durch Sauerstoff- oder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido, Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann und $R_5$ für Phenyl steht oder die Bedeutung von $R_1$ hat.

Insbesondere bedeutet A die Ergänzung zu einem der folgenden Ringe :

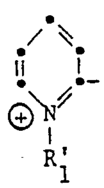 , 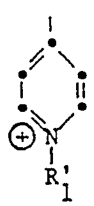 , 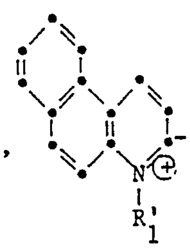 , 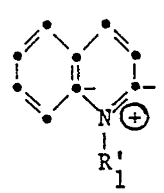 , 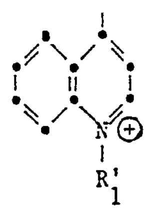

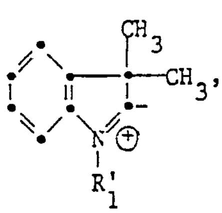 , 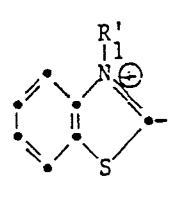 oder 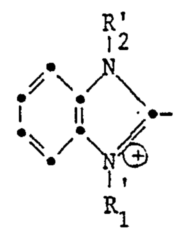

worin $R_1'$ und $R_2'$ unabhängig voneinander für $C_1$-$C_4$-Alkyl, Benzyl, Cyclohexyl, Hydroxyalkyl oder $C_3$-$C_4$-Alkenyl stehen und die genannten Ringe ansonsten unsubstituiert oder durch Halogen, Cyano, $C_1$-$C_4$-Alkyl, $C_1$-$C_4$-Hydroxyalkyl oder $C_1$-$C_4$-Alkoxy substituiert sind, und bevorzugt die Ergänzung zu einem der Ringe

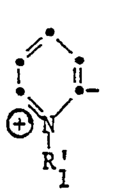 , 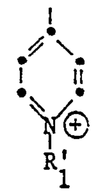 oder 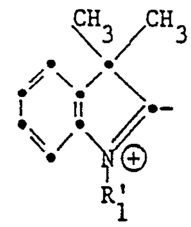

worin $R_1'$ unabhängig voneinander $C_1$-$C_4$-Alkyl bedeutet.

Besonders bevorzugt bedeutet A die Ergänzung zu einem gegebenenfalls substituierten und/oder mit carbocyclischen Ringen kondensierten Pyridinring, wobei bevorzugte ankondensierte Ringe und Substituenten vorstehend angegeben sind. Insbesondere ist A die Ergänzung zu einem Pyridinring, dessen N-Atom mit $C_1$-$C_4$-Alkyl, vor allem Methyl, quaterniert ist und der gegebenenfalls zusätzlich mit ein oder zwei $C_1$-$C_4$-Alkylgruppen substituiert ist, wobei die Verknüpfung zur $-\overset{R}{C}=CH$-Gruppe in 2- oder 4-Stellung erfolgt.

Hervorzuheben sind auch jene Verbindungen der Formel (I) und (Ia), worin A die Ergänzung zu einem Pyridinium- oder 3,3-Dimethylindoleniniumring der obigen Formeln bedeuten, worin $R_1'$ für Methyl steht.

Bedeutet R eine $C_2$-$C_3$-Alkylengruppe die mit einem N-Atom des Ringes A zu einem 5- oder 6-gliedrigen Ring verbunden ist, so handelt es sich beispielsweise um folgende Strukturen :

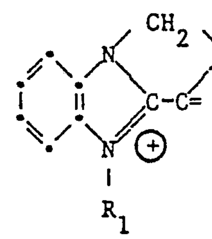 bzw. 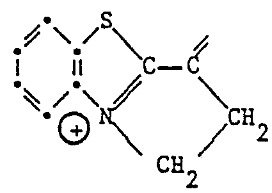

und ähnliche. Bevorzugt bedeutet R jedoch Wasserstoff.

In den Verbindungen der Formel (I) bedeutet mindestens einer der beiden Symbole m oder n die Zahl 2. Insbesondere sind jene Verbindungen der Formel (I) zu erwähnen, in denen m für 1 und n für 2 steht. Ist n = 2, kommen als Kupplungskomponenten solche in Frage, auf die 2 Diazokomponenten gekuppelt werden können, also solche der Formel HKKH (zur Definition von KK siehe unten). In Verbindungen der Formel (Ia) steht m vorzugsweise für die Zahl 1.

Als Substituenten im Phenylen- bzw. Naphthylenring B kommen beispielsweise in Frage : $C_1$-$C_4$-Alkyl (z. B. Methyl, Aethyl, n- und iso-Propyl), $C_1$-$C_4$-Alkoxy (z. B. Methoxy, Aethoxy, n-Butoxy, Dimethylaminoäthoxy, Trimethylaminoäthoxy), Halogen (z. B. Fluor, Chlor, Brom), $SO_3H$ und Acylamino (z. B. Acetylamino). In bevorzugten Verbindungen steht B für den Phenylenring, der gegebenenfalls 1 oder 2 Substituenten aus der Gruppe $C_1$-$C_4$-Alkyl, $C_1$-$C_4$-Alkoxy und Halogen tragen kann.

In Verbindungen der Formeln (I) und (Ia), insbesondere in jenen der Formel (I), in denen m für 2 steht, können die beiden dann im Molekül vorhandenen B gleich oder auch verschieden sein. So kann z. B. eines der beiden B unsubstituiertes und das andere substituiertes Phenylen oder beide B können verschieden substituierte Phenylenreste bedeuten (Beispiele für Substituenten siehe oben).

Bedeutet B in Verbindungen der Formeln (I) und (Ia) gegebenenfalls substituiertes Phenylen, so ist dieses vorzugsweise 1,4-Phenylen, vor allem unsubstituiertes 1,4-Phenylen.

KK bedeutet den Rest einer in der Azochemie, insbesondere in der Chemie der Azofarbstoffe, übliche Kupplungskomponente. Aus der grossen Vielzahl der Möglichkeiten seien beispielsweise erwähnt : Kupplungskomponenten der Benzolreihe, der Naphthalinreihe, der offenkettigen, aktive Methylengruppen enthaltenden Verbindungen und Kupplungskomponenten der heterocyclischen Reihe. Besonders interessante Kupplungskomponenten aus diesen Reihen sind folgende :

1) Benzolreihe

a) Phenole gemäss der Formel

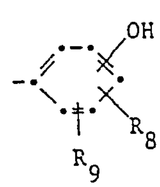

worin bedeuten : $R_8$ und $R_9$ unabhängig voneinander Wasserstoff, $C_1$-$C_4$-Alkyl, OH, $C_1$-$C_4$-Alkoxy, $SO_3H$, COOH, Alkoxycarbonyl, Acyl, Acylamino, Alkenyl, Cyclopentyl, Cyclohexyl, Aryl, Benzyl, Phenäthyl, Halogen. Als derartige Phenole kommen beispielsweise in Frage :

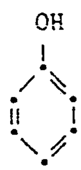 , 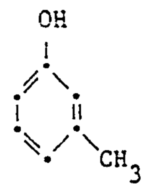 , 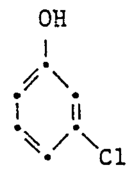 , 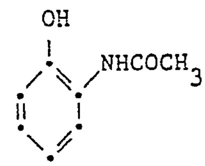 ,

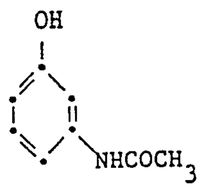 , 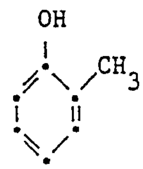 , 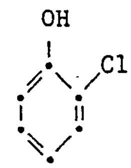 , 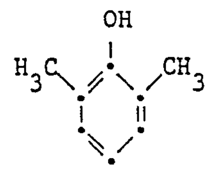

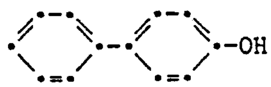 , 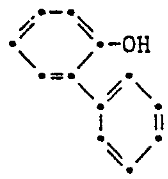 , 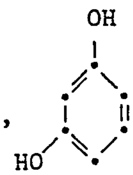 ,

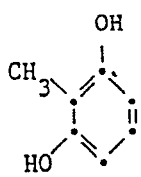 , 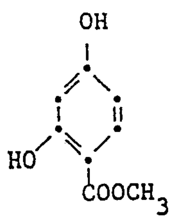 , 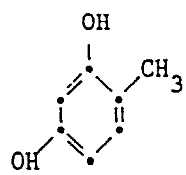 , 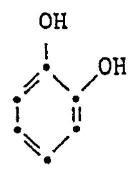

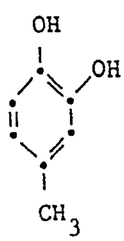 , 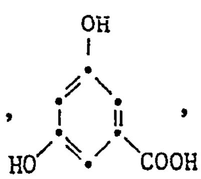 , 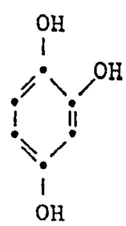 , 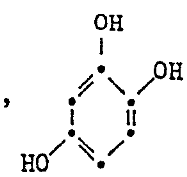 , 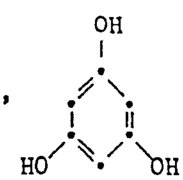

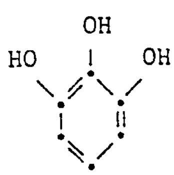 , 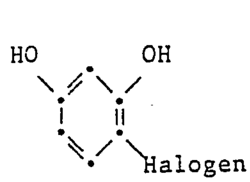

b) Benzole der Formel

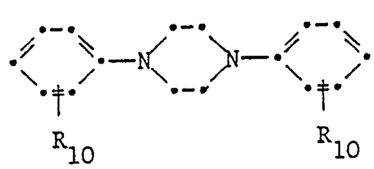

worin $R_{10}$ Wasserstoff, $C_1$-$C_4$-Alkyl und OH bedeutet ;

c) Benzole der Formel

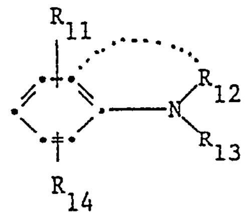

worin bedeuten :

$R_{11}$ H, $C_1$-$C_4$-Alkyl, OH, $C_1$-$C_4$-Alkoxy, Halogen, $SO_3H$, Acylamino,

$R_{12}$ und $R_{13}$ unabhängig voneinander : H, $C_1$-$C_8$-Alkyl, Alkenyl, Cycloalkyl, Aryl, Benzyl, Phenäthyl, $C_1$-$C_4$-Alkoxy, Hydroxyäthyl, Cyanäthyl, Halogenäthyl, $-CH_2CH_2-O-\underset{\underset{O}{\|}}{C}-C_1$-$C_4$-Alkyl,

$-CH_2CH_2-O-\underset{\underset{O}{\|}}{C}-O-C_1-C_4$-Alkyl,

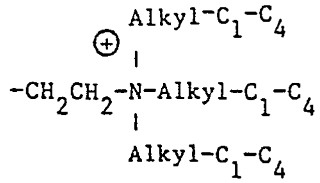 , 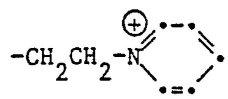

wobei $R_{12}$ mit dem Benzolkern auch einen 5- oder 6-gliedrigen, gesättigten Ring bilden kann, gegebenenfalls unter Einschluss weiterer Heteroatome,

$R_{12}$ und $R_{13}$ können auch einen 5- oder 6-gliedrigen Ring miteinander bilden, gegebenenfalls unter Einschluss weiterer Heteroatome, beispielsweise einen Piperidin-, Piperazin- oder Morpholinring,

$R_{14}$ : H, $C_1$-$C_4$-Alkyl, Halogen, $CF_3$, OH, $C_1$-$C_4$-Alkoxy und Amino ; beispielsweise :

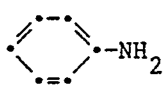 , 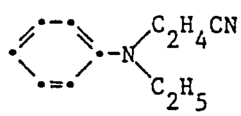 , 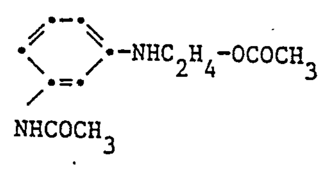 ,

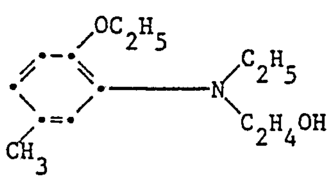 , 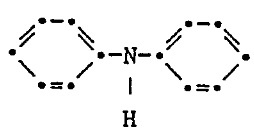 , 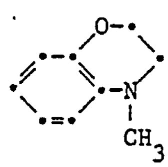

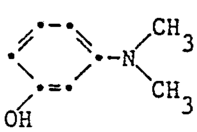 , 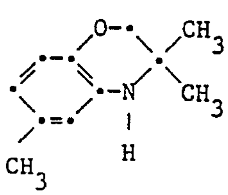 , 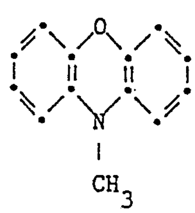

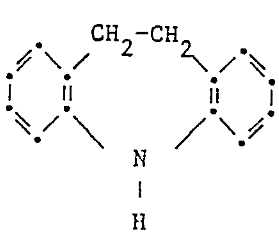 , 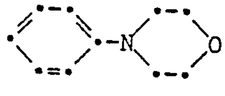 .

2) Naphthalinreihe

a) α-Naphthole der Formel

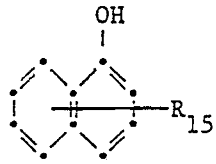

worin $R_{15}$ Wasserstoff, OH oder $SO_3H$ bedeutet, beispielsweise :

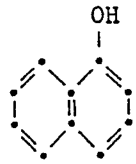
,
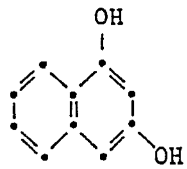
,
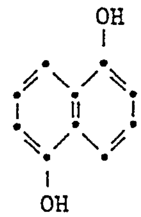

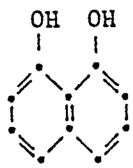
und
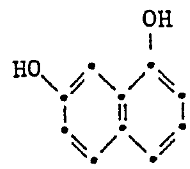

b) β-Naphthole der Formel

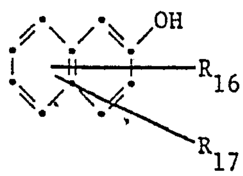

worin bedeuten :

$R_{16}$ Wasserstoff, OH, $SO_3H$ und $SO_2NH_2$,

$R_{17}$ Wasserstoff,

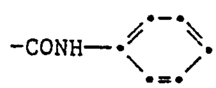

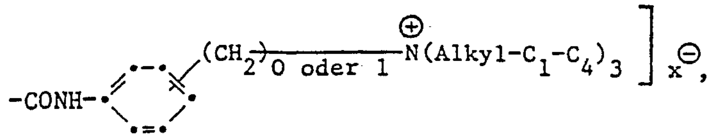
,

$$-CONH-(CH_2)_p-N-(Alkyl-C_1-C_4)_2, \quad \left[-(CH_2)_p-\overset{\oplus}{N}(Alkyl-C_1-C_4)_3\right] X^{\ominus}$$

und

p 2 und 3, $X^{\ominus}$ = Anion ;

beispielsweise :

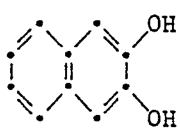
,
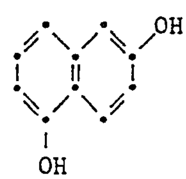
,
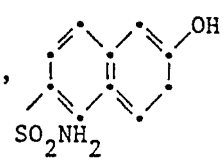
,

(Fortsetzung)

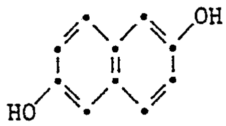,
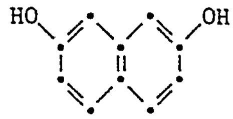,
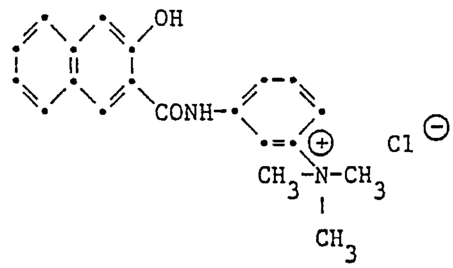

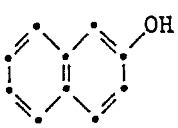 und 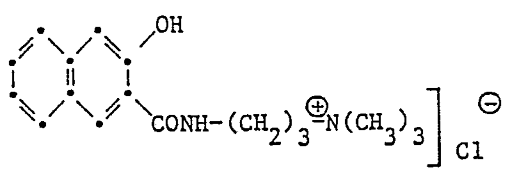

c) Naphthole der Formel

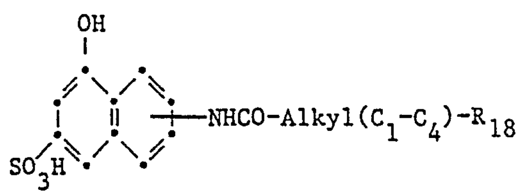

worin

$R_{18}$ eine basische Aminogruppe oder eine kationische Ammoniumgruppe bedeutet ;

beispielsweise

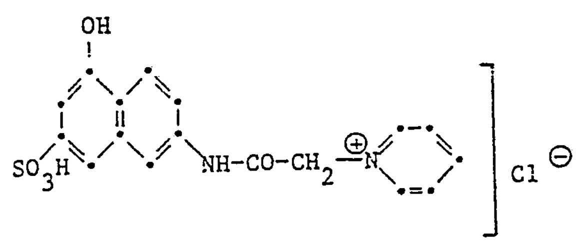

d) Naphthole gemäss der DE-A- 3 114 087 die der Formel

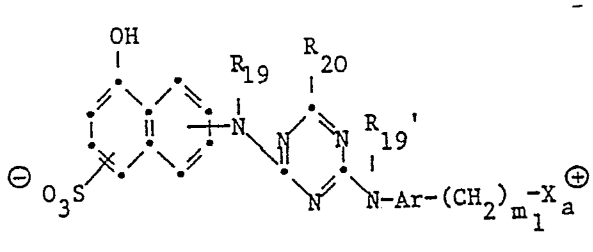

entsprechen, worin

$R_{19}$ Wasserstoff oder $C_1$-$C_4$-Alkyl,

Ar Arylen, insbesondere Phenylen,

$R_{20}$ Halogen, Hydroxy, $C_1$-$C_4$-Alkoxy, eine gegebenenfalls mono- oder disubstituierte Aminogruppe,

$m_1$ 0 oder 1 und

$X_a^{(+)}$ eine Ammoniumgruppe bedeuten, und worin die cyclischen und acylischen Reste weitere nichtionische Substituenten tragen können ;

beispielsweise :

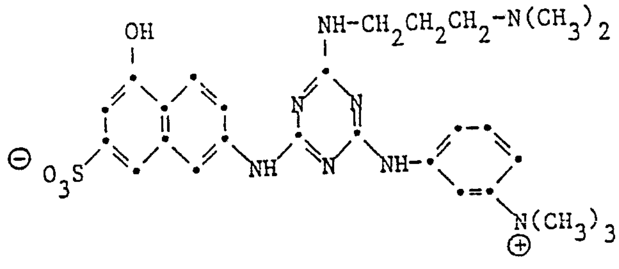

e) Naphthole gemäss EP-A-065 595 der Formel

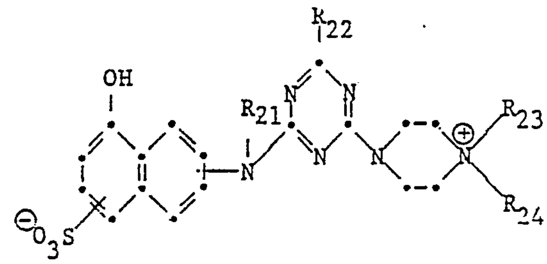

worin

$R_{21}$ Wasserstoff oder Alkyl,

$R_{22}$ Halogen, Hydroxy, Alkoxy oder eine gegebenenfalls mono- oder di-substituierte Aminogruppe, deren Substituenten — gegebenenfalls über ein Heteroatom — ringgeschlosen sein können zu einem 5- oder 6-gliedrigen N-Heterocyclus, beispielsweise zu einem Piperidin-, Piperazin- oder Morpholinring,

$R_{23}$ und $R_{24}$ unabhängig voneinander Wasserstoff, Alkyl, Alkenyl oder Aralkyl bedeuten,

und worin die cyclischen und acyclischen Reste weitere Substituenten tragen können, beispielsweise :

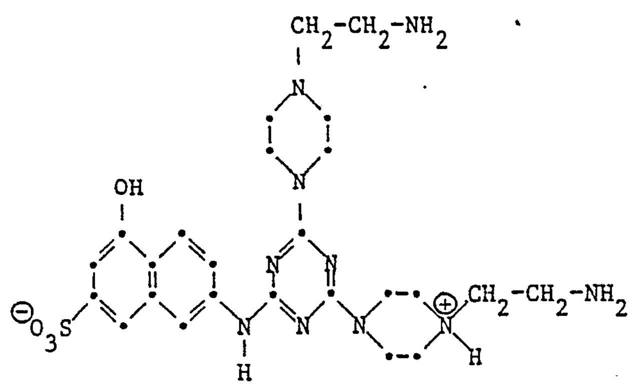

f) Naphthole gemäss der DE-A-3 224 786 der Formel

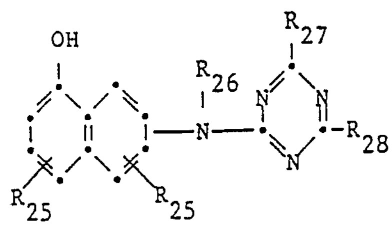

worin bedeuten :

$R_{25}$ —$SO_3H$ oder ein Salz davon,

$R_{26}$ Wasserstoff oder $C_1$-$C_4$-Alkyl,

$R_{27}$ Halogen, OH, Alkoxy oder eine gegebenenfalls mono- oder di-substituierte Aminogruppe inklusive eines 5- oder 6-gliedrigen cyclischen Amins,

$R_{28}$ ein substituiertes Piperazin der Formel

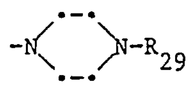

oder

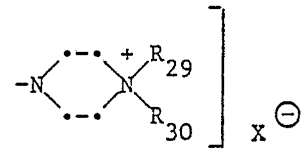

worin $R_{29}$ und $R_{30}$H, Alkyl, Alkenyl, Aminoalkyl oder Aralkyl ; und X ein Anion bedeutet ; beispielsweise :

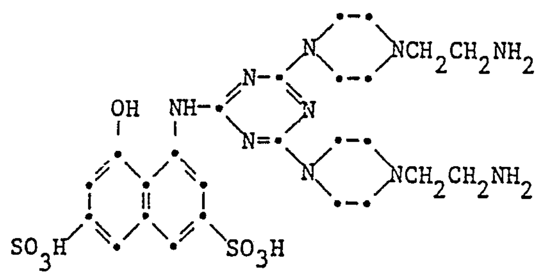

g) Naphthole der Formel

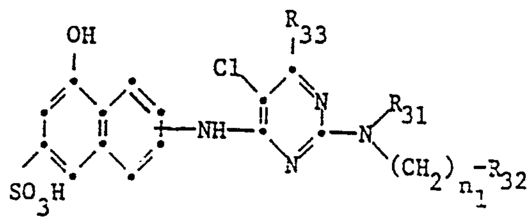

worin bedeuten :

$R_{31}$ Wasserstoff und $C_1$-$C_4$-Alkyl,

$R_{32}$ eine basische Aminogruppe oder eine kationische Ammoniumgruppe, oder

$R_{31}$ ist mit $R_{32}$ unter Einbezug des N-Atoms zu einem heteroaliphatischen Ring verbunden, beispielsweise einem solchen der Formel

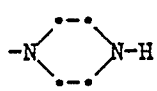

oder

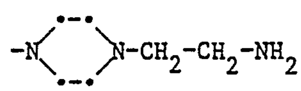

$R_{33}$ Halogen, OH, Alkoxy oder eine gegebenenfalls mono- oder disubstituierte Aminogruppe und

$n_1$ die Zahlen 2, 3 oder 4.

h) Naphthole gemäss der DE-A-3 133 568 der Formel

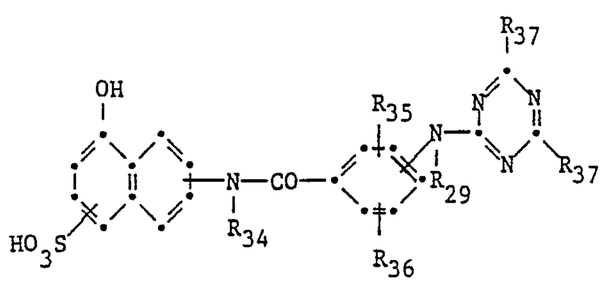

worin $R_{34}$ Wasserstoff oder Alkyl,

$R_{35}$ und $R_{36}$ unabhängig voneinander Wasserstoff, Alkyl, Alkoxy, oder Halogen, und

$R_{37}$ Hydroxy, Alkoxy oder eine gegebenenfalls mono- oder disubstituierte Aminogruppe oder eine cyclische, gegebenenfalls weitersubstituierte Aminogruppe bedeuten,

beispielsweise :

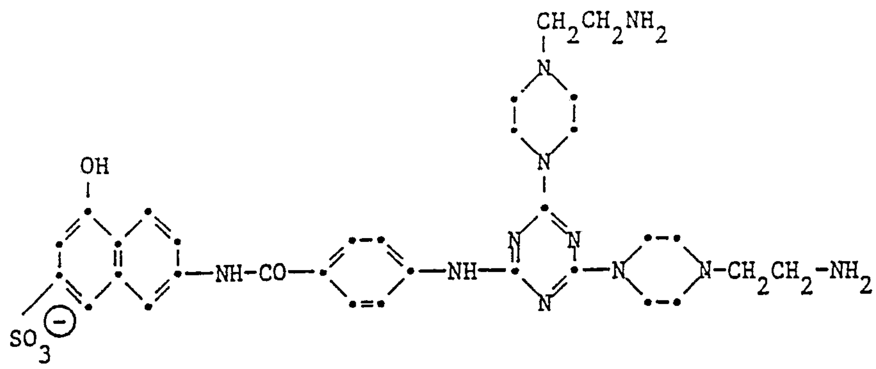

i) Bis-Naphthole der Formel

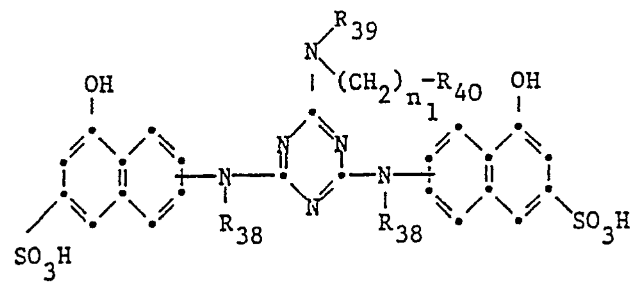

worin bedeuten :

$R_{38}$ Wasserstoff oder $C_1$-$C_4$-Alkyl,

$R_{39}$ Wasserstoff oder $C_1$-$C_4$-Alkyl,

$R_{40}$ eine basische Aminogruppe oder eine kationsiche Ammoniumgruppe, oder

$R_{39}$ bildet mit $R_{40}$ einen heteroaliphatischen Ring der seinerseits substituiert sein kann, z. B. einen Ring der Formel

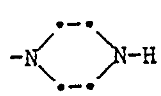 oder 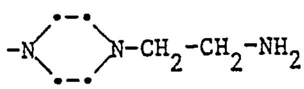

und

$n_1$ die Zahlen 2, 3 oder 4 ;

beispielsweise :

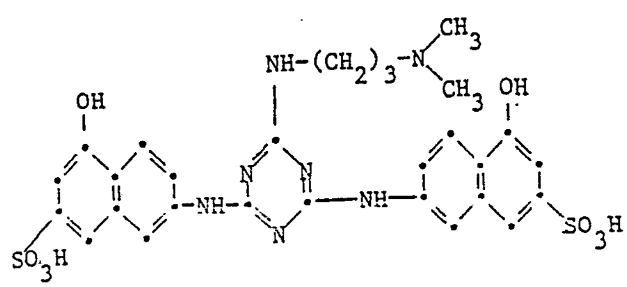

k) α-Naphthylamine der Formel

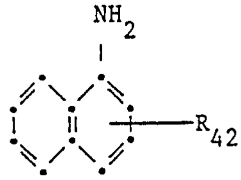

worin $R_{42}$ Wasserstoff, OH oder $SO_3H$ bedeutet,

beispielsweise :

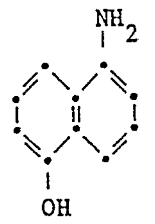
,
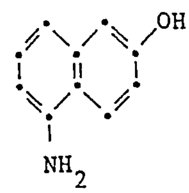

l) β-Naphthylamine der Formel

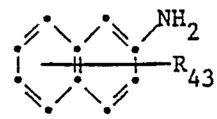

worin $R_{43}$ Wasserstoff, OH, $NH_2$ oder $SO_3H$ bedeutet,
beispielsweise :

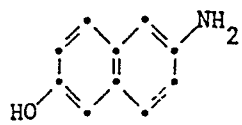
,
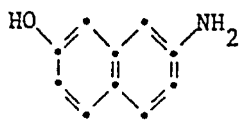
und
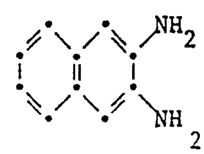

m) α-Naphthole gemäss DE-A-2 915 323 der Formel

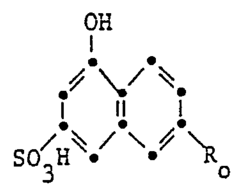

worin $R_0$ Wasserstoff, $NH_2$, $(C_1$-$C_4)$Alkyl-carbonylamino, Benzoylamino, dessen Phenylrest durch 1 oder 2 Substituenten aus der Reihe Halogen, $NO_2$, $NH_2$, $C_1$-$C_4$-Alkyl und $C_1$-$C_4$-Alkoxy substituiert sein kann ; oder

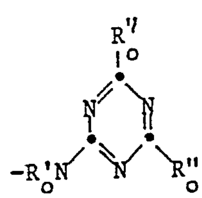

bedeutet,
worin $R_0'$ Wasserstoff oder $C_1$-$C_4$-Alkyl und $R_0''$ OH, $NH_2$ oder einen aliphatischen, cycloaliphatischen oder aromatischen Aminrest bedeuten, wobei dieser Aminrest beispielsweise der Formel —$NR_a$—Q—$NR_bR_c$ entspricht, worin $R_a$ H oder $CH_3$, Q $C_1$-$C_6$-Alkylen, $R_b$ und $R_c$ H, $C_1$-$C_4$-Alkyl, 2-Hydroxyäthyl, oder zusammen mit dem N-Atom einen Piperidin-, Piperazin- oder Morpholinring bedeuten, wobei die Gruppe —$NR_bR_c$ auch quaterniert sein kann ;
beispielsweise :

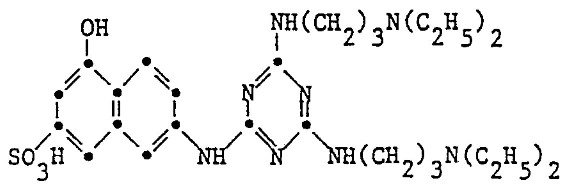

3) Offenkettige, methylenaktive Verbindungen als Kupplungskomponenten :

A) Besonders geeignete Kupplungskomponenten stellen die Ester und Amide der Acetessigsäure dar. Solche Ester und Amide lassen sich leicht durch Umsetzung von —OH und —NH-haltigen Verbindungen mit Diketen herstellen, wie es beispielsweise in Houben-Weyl, « Methoden der organischen Chemie », Vol. 7, Teil 4, Sauerstoffverbindungen II, beschrieben ist.

Je nachdem, wie viele reaktionsfähige Amino- oder Hydroxygruppen im Molekül für die Umsetzung mit Diketen zur Verfügung stehen, lassen sich Kupplungskomponenten mit einem, zwei oder auch mehreren kupplungsfähigen Acetoacetylresten herstellen.

a) Kupplungskomponenten, die nur einen Acetoacetylrest pro Molekül enthalten, entsprechen z. B. der Formel

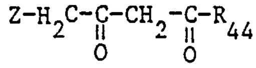

Darin bedeutet $R_{44}$ gegebenenfalls substituiertes Alkoxy mit 1-8 Kohlenstoffatomen oder Cycloalkoxy, gegebenenfalls substituiertes Benzyloxy oder Phenoxy, das gegebenenfalls durch $C_1$-$C_4$-Alkyl, $C_1$-$C_4$-Alkoxy, Halogen, Acylamino, Carbonamido, Sulfonamido, Dialkylamino, $C_1$-$C_4$-Alkylcarbonyl, $C_1$-$C_4$-Alkoxycarbonyl, OH oder Phenyl substituiert sein kann.

$R_{44}$ bedeutet weiterehin einen Rest der Formel

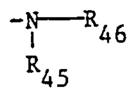

wobei

$R_{45}$ $C_1$-$C_4$-Alkyl oder vorzugsweise Wasserstoff und

$R_{46}$ Wasserstoff, gegebenenfalls substituiertes (z. B. durch Halogen, OH, Alkoxy, Amino) $C_1$-$C_8$-Alkyl, Cycloalkyl, einen gegebenenfalls substituierten Benzylrest oder einen Phenylrest der Formel

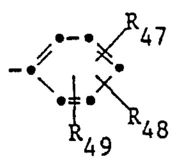

bedeutet.

$R_{47}$ ist dabei Wasserstoff, $C_1$-$C_4$-Alkyl, $C_1$-$C_4$-Alkoxy, Halogen, Cyano, Nitro, OH, Dialkylamino, Phenylamino,

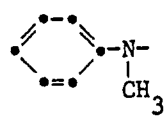

Phenyl, Acylamino, gegebenenfalls substituiertes Carbonamido, gegebenenfalls substituiertes Sulfonamido, $C_1$-$C_4$-Alkylcarbonyl, $C_1$-$C_4$-Alkoxycarbonyl, $C_1$-$C_4$-Alkylsulfonyl, ein Rest der Formel $-(CH_2)_w-K^{\oplus}An^{-}$ gemäss DE-A-3 133 360, wobei $K^{\oplus}$ eine aliphatische oder aromatische Ammoniumgruppe, beispielsweise

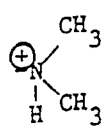 , 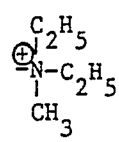 oder 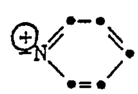

und w 1 oder 2 bedeutet,
ein Rest der Formel

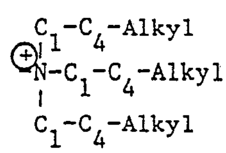

gemäss der DE-A-3 231 398,
vorzugsweise

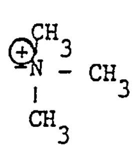

$R_{48}$ ist unabhängig von $R_{47}$ Wasserstoff, $C_1$-$C_4$-Alkyl, $C_1$-$C_4$-Alkoxy oder Halogen ;
$R_{49}$ ist unabhängig von $R_{47}$ und $R_{48}$ Wasserstoff, Halogen oder $C_1$-$C_4$-Alkyl.
$R_{46}$ kann weiterhin zusammen mit $R_{45}$ und gegebenenfalls unter Einschluss weiterer Heteroatome einen 5- oder 6-gliedrigen gesättigten oder ungesättigten Ring bilden, beispielsweise der Formel

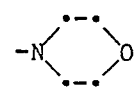 , 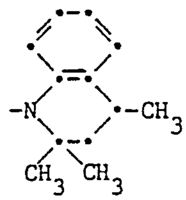 , 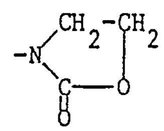 , 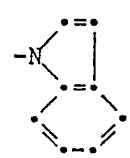 , 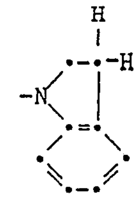

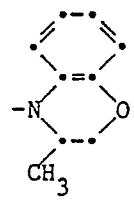 , 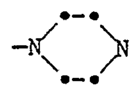 oder 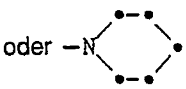 .

$R_{44}$ hat weiterhin auch die Bedeutung eines heterocyclischen Amins, beispielsweise der Formel

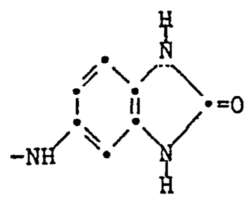 , 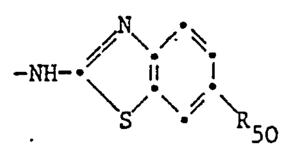 , 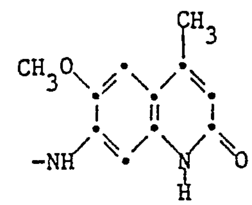

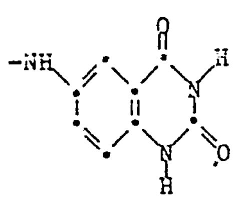 , 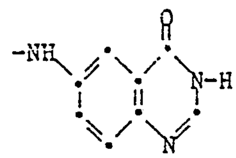 , 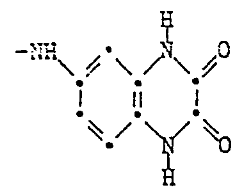

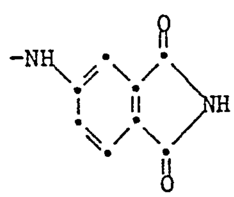 , 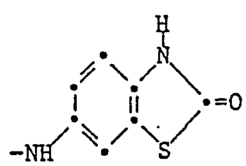 oder 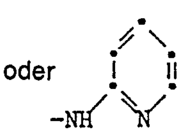

wobei $R_{50}$ Methyl, Aethyl, Methoxy, Aethoxy oder vorzugsweise Wasserstoff oder Acetylamino bedeuten.
$R_{44}$ beudetet weiterhin einen Rest der Formel

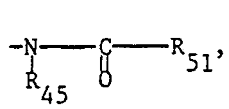 , 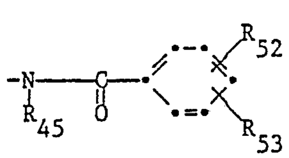 , 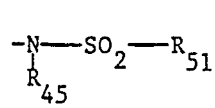 oder

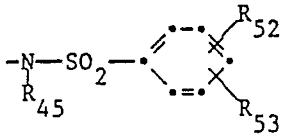 ,

wobei $R_{45}$ die oben angegebene Bedeutung hat und
$R_{51}$ ein gegebenenfalls substituiertes Alkyl mit 1-8 Kohlenstoffatomen, Cycloalkyl, Amino, Alkylamino, Dialkylamino, Phenylamino, Alkoxy oder Phenoxy und
$R_{52}$ und $R_{53}$ unabhängig voneinander Wasserstoff, $C_1$-$C_4$-Alkyl, $C_1$-$C_4$-Alkoxy, Halogen oder Dialkylamino bedeuten.

Z bedeutet Halogen oder vorzugsweise Wasserstoff oder eine aliphatische oder aromatische, gegebenenfalls substituierte Amino- oder Ammoniumgruppe gemäss EP-A-16726 und EP-A-97232, beispielsweise der Formel

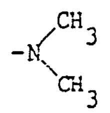 , 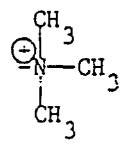 , 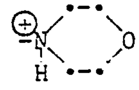 , 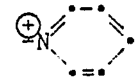 oder 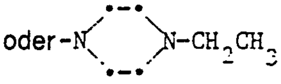

b) Kupplungskomponenten, die 2 kupplungsfähige Acetoacetylreste pro Molekül enthalten, entsprechen der Formel

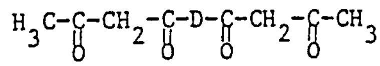

D bedeutet dabei den Rest eines zweiwertigen aliphatischen Alkohols, beispielsweise Aethylenglykol, eines aliphatischen Aminoalkohols, beispielsweise Aminoäthanol, eines aliphatischen oder aromatischen Diamins, beispielsweise Diaminopropan, Piperazin, m- oder p-Phenylendiamin, Bis-4,4'-Aminophenylharnstoff, eines Amino-phenols oder -naphthols, beispielsweise m-Aminophenol, 2-Amino-7-hydroxynaphthalin, eines Dihydroxy-benzols oder -naphtalins, beispielsweise Resorcin oder 2,7-Dihydroxynaphtalin, eines Hydroxy- oder Aminobenzoesäureamids, beispielsweise Anthranilamid oder Salicylsäureamid, eines Aminobenzolsulfonamids, wobei alle diese Reste gegebenenfalls durch $C_1$-$C_4$-Alkyl, $C_1$-$C_4$-Alkoxy, Halogen noch weiter substituiert sein können.

B) Ester und Amide der Malonsäure als Kupplungskomponenten entsprechen der Formel

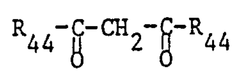

wobei $R_{44}$ die oben angegebene Bedeutung hat, beispielsweise

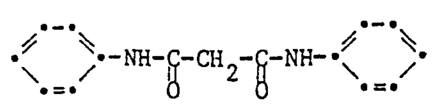 oder 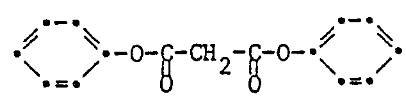

C) Ester und Amide der Cyanessigsäure als Kupplungskomponenten entsprechen z. B. der Formel

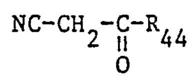

wobei $R_{44}$ die oben angegebene Bedeutung hat, beispielsweise

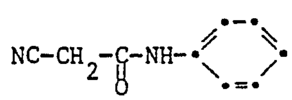

4) Kupplungskomponenten der heterocyclischen Reihe

a) Pyridine gemäss der DE-A-3 201 268 und 3 206 092, beispielsweise solche der Formel

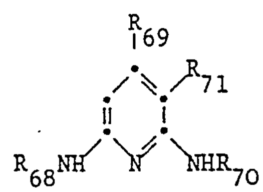

worin bedeuten : $R_{71}$ : CN, $C_1$-$C_4$-Alkyl, $NO_2$, Halogen ; $R_{68}$ und $R_{70}$ : H, $C_1$-$C_4$-Alkyl, Alkenyl, Cyclohexyl, Aryl, Benzyl, Phenäthyl oder einer der Reste von $R_{68}$ und $R_{70}$ : gegebenenfalls durch Cl, $CH_3$, $C_2H_5$, tert.-Butyl, Phenoxy, Methoxy, Aethoxy, Propoxy oder Butoxy ein- oder mehrfach substituiertes Phenyl und der andere der Reste $R_{68}$ und $R_{70}$ gegebenenfalls durch $C_1$-$C_4$-Alkoxy oder Phenyl substituiertes $C_2$-$C_8$-Alkyl, Allyl, Cyclopentyl, Cyclohexyl, Methylcyclohexyl,

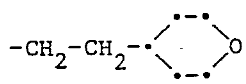 oder 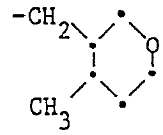

und $R_{69}$ Wasserstoff, $CH_3$, $C_2H_5$ oder $C_3H_7$ ; beispielsweise

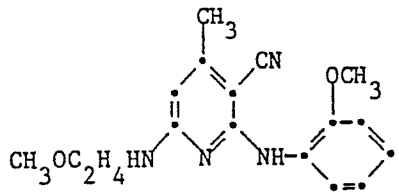 , 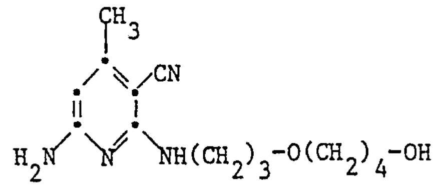

b) Pyridine gemäss der DE-A-24 36 897 und 32 96 092, beispielsweise solche der Formel :

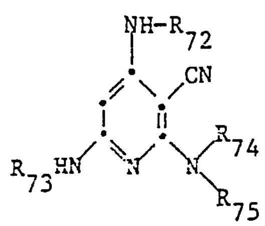 bzw. 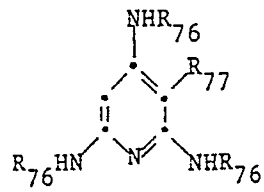

worin bedeuten :

$R_{72}$ und $R_{73}$ eine gegebenenfalls durch $C_1$-$C_8$-Alkoxy substituierte $C_1$-$C_8$-Alkylgruppe,

$R_{74}$ und $R_{75}$ ein Wasserstoffatom, eine $C_1$-$C_8$-Alkylgruppe, die durch Hydroxy, Amino, $C_1$-$C_8$-Alkoxy oder $NT_1T_2$ substituiert sein kann, eine gegebenenfalls durch Methylreste substituierte Cycloalkylgruppe, eine gegebenenfalls durch 1 bis 3 Chlor, $C_1$-$C_4$-Alkyl oder $C_1$-$C_4$-Alkoxy substituierte Benzylgruppe oder zusammen die Reste $-(CH_2)_4-$, $-(CH_2)_3-$, $-(CH_2)_4-$, $-(CH_2)_3-O-(CH_2)_3-$, $-(CH_2)_3-NCH_3-(CH_2)_3-$, $-(CH_2)_3-S-(CH_2)_3-$ oder $-NH-(CH_2)_3-$ und $T_1$ und $T_2$ eine $C_1$-$C_8$-Alkylgruppe,

$R_{76}$ H, $C_1$-$C_4$-Alkyl, Alkenyl, Cyclohexyl, Aryl, Benzyl,

$R_{77}$ CN, COOH, COOAlkyl, COOCyclohexyl, COOAryl, COOBenzyl, Alkyl($C_1$-$C_4$), $NO_2$, Halogen, $SO_2$-Alkyl($C_1$-$C_4$) ;

beispielsweise :

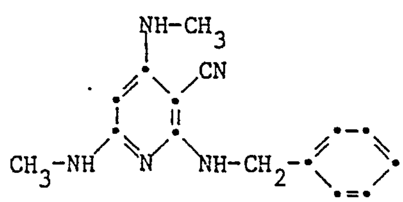 , 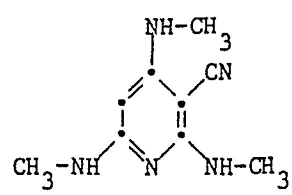

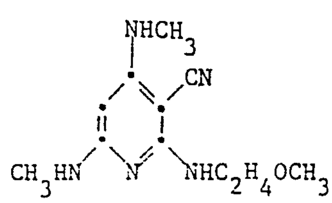 .

c) Pyridone der Formel

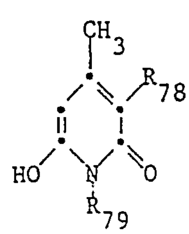

worin bedeuten :

$R_{79}$ gegebenenfalls substituiertes $C_1$-$C_8$-Alkyl, oder Wasserstoff und $R_{78}$ CN, $CONH_2$ und $SO_2NH_2$ ; beispielsweise :

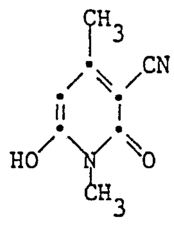
,
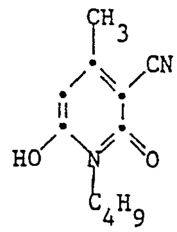

d) Pyridone gemäss der CH-A- 628 078 der Formel :

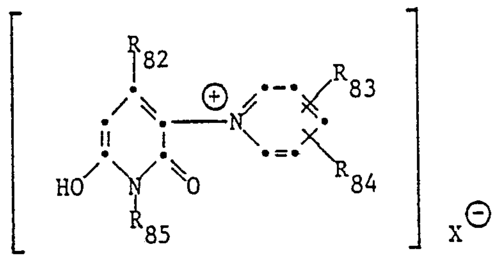

worin bedeuten :

$R_{82}$, $R_{83}$ und $R_{84}$ unabhängig voneinander : H, $C_1$-$C_4$-Alkyl,

$R_{85}$ : H, $C_1$-$C_{20}$-Alkyl, und

X : ein Anion ;

beispielsweise :

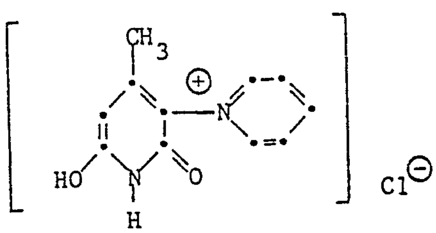

e) Pyridone gemäss der DE-A-3 037 911 der Formel

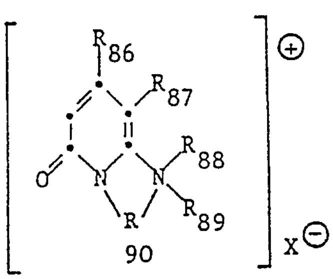

worin bedeuten :

$R_{86}$ : H, $C_1$-$C_4$-Alkyl, Cycloalkyl, Aryl, Aralkyl, Heterocyclus, CN, OH, $COOR_{91}$, $CONR_{91}R_{92}$, $COR_{92}$ oder $CONH_2$, ($R_{91}$ und $R_{92}$ = $C_1$-$C_4$-Alkyl, Cycloalkyl, Aryl, Aralkyl, Heterocyclus wobei $R_{92}$ auch H sein kann)

$R_{87}$ : $R_{86}$, Halogen, $NO_2$

$R_{88}$ und $R_{89}$ : $C_1$-$C_4$-Alkyl, Cycloalkyl, Aryl, Aralkyl, Alkenyl, wobei $R_{89}$ auch H sein kann,

$R_{90}$ Brückenglied, und

X : ein Anion ;

beispielsweise :

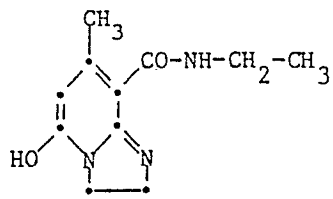

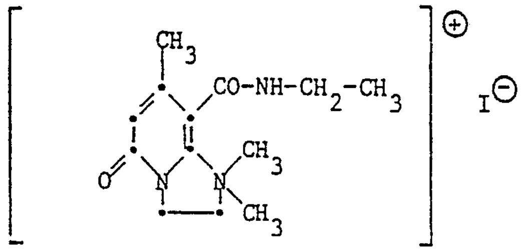

g) Chinoline der Formel

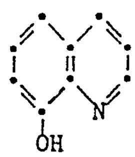

h) Indole der Formeln :

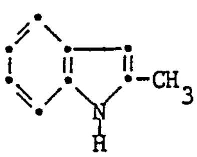 , 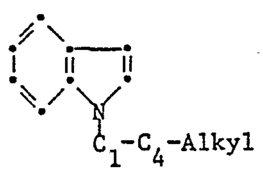 , 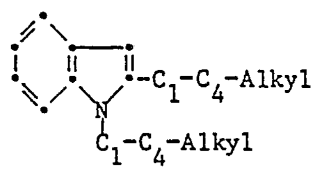

i) Pyrimidine der Formel :

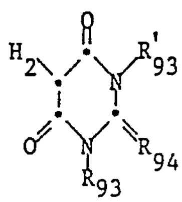

worin

$R_{93}$ und $R'_{93}$ Wasserstoff oder $C_1$-$C_4$-Alkyl, und

$R_{94}$ O oder N—CN bedeuten ;

beispielsweise :

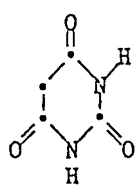

k) Pyrimidine gemäss EP-A-87 037 der Formel :

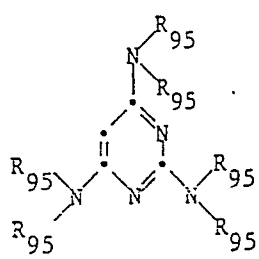

worin bedeuten: jedes $R_{95}$ unabhängig voneinander: H, $C_1$-$C_4$-Alkyl, Alkenyl, Cyclopentyl, Cyclohexyl, Aryl, Benzyl und Phenäthyl;
beispielsweise

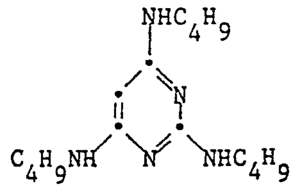
,
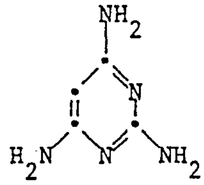

l) Pyrazole gemäss EP-A-87 037 der Formel

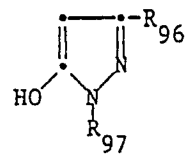

worin bedeuten:
$R_{97}$H, $C_1$-$C_4$-Alkyl, Alkenyl, Cyclohexyl, Aryl, Benzyl und Phenyläthyl, und
$R_{96}$ = $R_{97}$ oder $COOR_{97}$ oder $CONR_{97}$,
beispielsweise

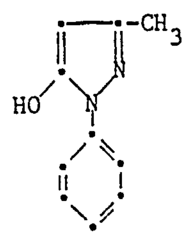

m) Pyrazole gemäss EP-A-87 037 der Formel

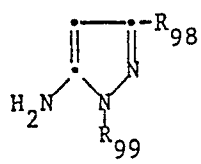

worin bedeuten:
$R_{99}$H, $C_1$-$C_4$-Alkyl, Alkenyl, Cyclohexyl, Aryl, Benzyl und Phenäthyl und
$R_{98}$ = $R_{99}$ oder $COOR_{99}$ oder $CONR_{99}$;
beispielsweise

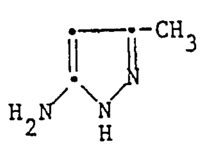
,
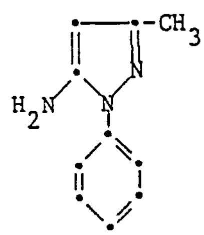

n) Pyrazole gemäss EP-A-72508 und EP-A-75773 der Formel:

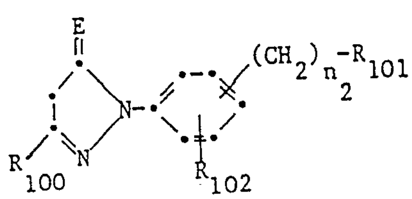

worin bedeuten :

$R_{100}$ $C_1$-$C_4$-Alkyl, oder $C_1$-$C_4$-Alkoxycarbonyl,
E = NH oder O,
$R_{102}$ Wasserstoff oder ein nichtionischer Substituent
$n_2$ 0, 1 oder 2, und

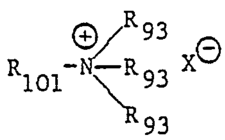 , 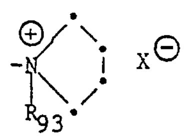 , 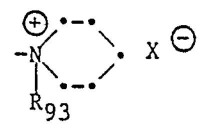

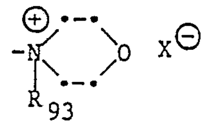 , 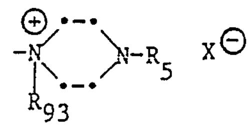 , 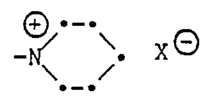

worin $R_{93}$ Wasserstoff und $C_1$-$C_4$-Alkyl und
X ein Anion bedeutet,
beispielsweise :

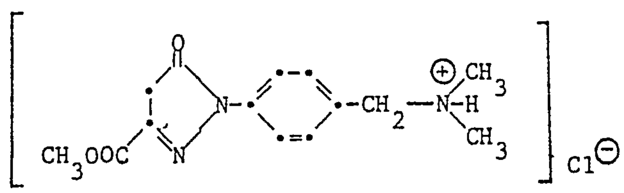

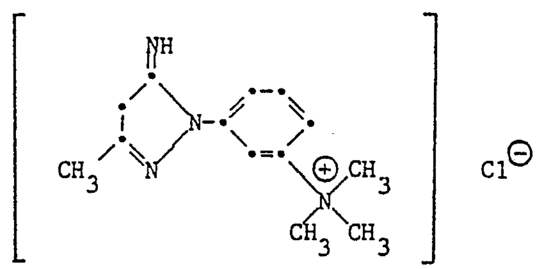

Soweit in obigen Definitionen und in der übrigen Beschreibung Alkylgruppen als solche oder in zusammengesetzten Gruppen als « gegebenenfalls substituiert » bezeichnet sind, kommen als Beispiele für solche Substituenten, sofern nichts anderes angegeben ist, folgende in Frage : Hydroxy, Cyano, Halogen (z. B. Cl, Br), $C_1$-$C_4$-Alkoxy, Phenyl (gegebenenfalls 1-3-fach substituiert durch Halogen, Methyl oder Methoxy), Amino, Alkylamino oder Dialkylamino. Sofern ebenfalls nichts anderes angegeben ist, weisen Alkylgruppen als solche oder in zusammengesetzten Gruppen vorzugsweise 1-8, insbesondere 1-4, C-Atome und Cycloalkylgruppen vorzugsweise 5 oder 6 C-atome auf. Beispiele für als nichtionische Substituenten bezeichnete Gruppen sind $C_1$-$C_4$-Alkyl, $C_1$-$C_4$-Alkoxy und Halogen. Unter Aryl wird vorzugsweise Naphthyl und insbesondere Phenyl verstanden.

Es versteht sich von selbst, dass für Verbindungen der Formel (I), worin n = 2, nur solche Kupplungskomponenten in Frage kommen, auf die zwei Diazokomponenten gekuppelt werden können. Beispiele dafür sind die oben unter 3Ab) genannten Kupplungskomponenten, Resorcin u. a.

KK kann also in erfindungsgemässen Verbindungen z. B. den Rest eines (r) gegebenenfalls substituierten Phenols, Dihydroxybenzols, Anilins, Diphenylamins, Naphthols, Naphtholsulfonsäure, Dihydroxynaphthalins, Naphthylamins, Hydroxynaphthylamins, 2,6-Diamino- oder Dihydroxypyridins, Pyridons, Chinolins, Benzimidazols, Benzochinolins, Pyrimidins, Pyrimidons, Indols, Pyrazols, oder eines Derivates der Acetessigsäure, Malonsäure oder Cyanessigsäure bedeuten. Beispiele für mögliche Substituenten können den vorstehenden Punkten 1) bis 4) (Aufzählung von möglichen Kupplungskomponenten) für die betreffenden Typen von Kupplungskomponenten entnommen werden.

Besonders zu erwähnen sind Verbindungen der Formel (I) und (Ia), worin KK den Rest eines (r) gegebenenfalls substituierten Acetoacetylamids oder -esters, Pyrimidins, Pyrimidons, 8-Hydroxychinolins, Benzimidazols, Naphthols, Pyridons, Naphtholsulfonsäure, Anilins oder Dihydroxybenzols, insbesondere eines gegebenenfalls substituierten Acetoacetylamids oder -esters oder Pyridons, bedeuten. Beispiele für diese Kupplungskomponenten und deren mögliche Substituenten sind den vorstehenden Punkten 3)Aa), 3)Ab), 4)c), d), e), g), i), k) ; 1)a), c) ; 2)a), b), c), d), e), f), g) h), i), m) zu entnehmen.

Hervorzuheben sind insbesondere jene erfindungsgemässen Verbindungen, in denen KK den Rest einer Kupplungskomponente der folgenden Formeln bedeutet :

$Z—CH_2—CO—CH_2—CO—R_{44}$, $CH_3—CO—CH_2—CO—D—CO—CH_2—CO—CH_3$,

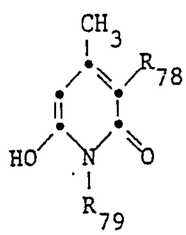 , 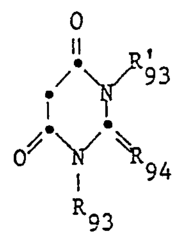 , 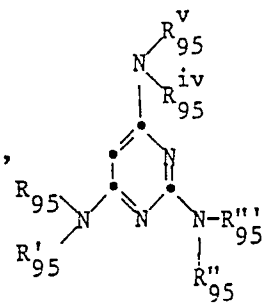

worin Z Wasserstoff, Halogen oder eine gegebenenfalls substituierte aliphatische, cycloaliphatische oder aromatische Amino- oder Ammoniumgruppe, insbesondere der Formel

$-N(CH_3)_2$, $\overset{\oplus}{N}(CH_3)_3$, 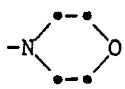 , 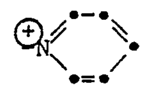 oder 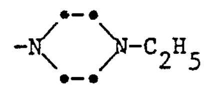

$R_{44}$ gegebenenfalls substituiertes Alkoxy, Benzyloxy oder Phenoxy, eine unsubstituierte oder mono- oder disubstituierte Aminogruppe, eine 5- oder 6-gliedrige cyclische gesättigte oder ungesättigte Aminogruppe, D den Rest eines zweiwertigen aliphatischen Alkohols, eines aliphatischen Aminoalkohols, eines aliphatischen oder aromatischen Diamins, eines Aminophenols oder -naphthols, eines Dihydroxybenzols oder -naphthalins, eines Hydroxy- oder Aminobenzoesäureamids, eines Aminobenzolsulfonamids, wobei alle diese Reste gegebenenfalls durch $C_1$-$C_4$-Alkyl, $C_1$-$C_4$-Alkoxy oder Halogen substituiert sein können ;

$R_{78}$ CN, $CONH_2$ oder $SO_2NH_2$,

$R_{79}$ Wasserstoff oder gegebenenfalls substituiertes $C_1$-$C_8$-Alkyl,

$R_{93}$ und $R'_{93}$ unabhängig voneinander Wasserstoff oder $C_1$-$C_4$-Alkyl,

$R_{94}$ O oder N-CN und $R_{95}$, $R'_{95}$, $R''_{95}$, $R'''_{95}$, $R_{95}^{iv}$ und $R_{95}^{v}$ jeweils unabhängig voneinander Wasserstoff, $C_1$-$C_4$-Alkyl, $C_2$-$C_4$-Alkenyl, Cyclopentyl, Cyclohexyl, Aryl, insbesondere Phenyl, Benzyl oder Phenäthyl bedeuten. Z bedeutet dabei insbesondere Wasserstoff, Halogen oder

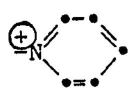

vorzugsweise Wasserstoff und $R_{44}$ hat vorzugsweise die in obigem Absatz 3)A)a) angegebenen Bedeutungen, und insbesondere kann es —NH—$R_{49}$ oder

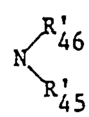

bedeuten, worin $R'_{46}$ $C_1$-$C_4$-Alkyl, $R'_{45}$ $C_1$-$C_4$-Alkyl oder Phenyl oder $R_{45}$ und $R_{46}$ gemeinsam die Ergänzung zu einem Morpholin-, Piperidin-, Piperazin-, Pyrrolidin- oder

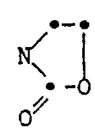

-Ring und $R'_{49}$ Wasserstoff, Phenyl ($C_1$-$C_4$)-alkyl, Cyclohexyl, Cyclohexyl-($C_1$-$C_4$)-alkyl, Benzoyl, Naphthyl oder eine Gruppe der Formel

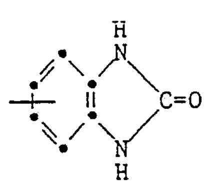 , 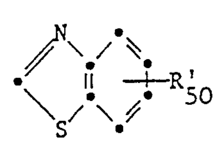 oder 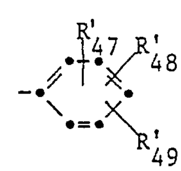

bedeuten, wobei $R'_{50}$ Wasserstoff, Halogen, $C_1$-$C_4$-Alkyl oder $C_1$-$C_4$-Alkoxy, $R'_{47}$ Wasserstoff, Halogen, $C_1$-$C_4$-Alkyl, $C_1$-$C_4$-Alkoxy, —NHCO-Alkyl($C_1$-$C_4$) oder —$SO_2NH_2$, $R'_{48}$ Wasserstoff, Halogen, $C_1$-$C_4$-Alkyl oder $C_1$-$C_4$-Alkoxy und $R'_{49}$ Wasserstoff oder Halogen bedeuten.

Interessant sind dabei auch die Verbindungen der Formeln (I) und (Ia), worin KK den Rest eines der 3 heterocyclischen Kupplungskomponenten der vorstehenden Formeln (Pyridon-, Pyrimidon- und Pyrimidinverbindungen) bedeutet.

Von besonderem Interesse sind auch jene Verbindungen der Formeln (I) und (Ia), worin KK den Rest einer der folgenden Kupplungskomponenten bedeutet :

$$CH_3—CO—CH_2—CO—D'—CO—CH_2—CO—CH_3,$$

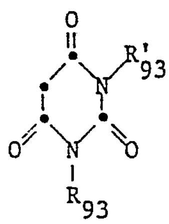 , 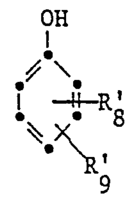 oder 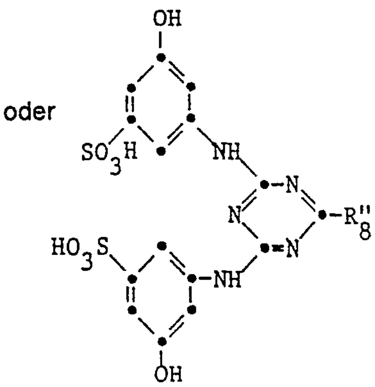

worin D' 1,4-Piperazinyl oder

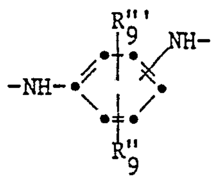 , 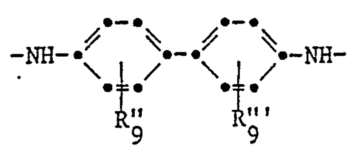 oder

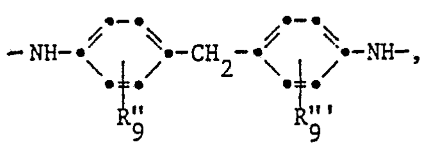

$R''_9$ und $R'''_9$ unabhängig voneinander jeweils Wasserstoff, $C_1$-$C_4$-Alkyl, $C_1$-$C_4$-Alkoxy oder Halogen, $R'_8$ und $R'_9$ jeweils unabhängig Wasserstoff, $C_1$-$C_4$-Alkyl, OH, $C_1$-$C_4$-Alkoxy oder Halogen, $R''_8$—$NH(CH_2)_x$—$N(Alk)_2$, x eine Zahl von 2 bis 4, Alk $C_1$-$C_4$-Alkyl, $R_{93}$ und $R'_{93}$ unabhängig jeweils Wasserstoff oder $C_1$-$C_4$-Alkyl bedeuten.

Die Acetessigester-Kupplungskomponente der Formel

$$CH_3—CO—CH_2—CO—D'—CO—CH_2—CO—CH_3$$

sowie die 2 I-Säurereste enthaltende Kupplungskomponente der obigen Formel kommen vor allem für solche Verbindungen der Formel (I) in Frage, in denen n für 2 steht.

Es versteht sich von selbst, dass die Reste der Acetessigsäurederivate in verschiedenen tautomeren Formen geschrieben werden können, z. B.

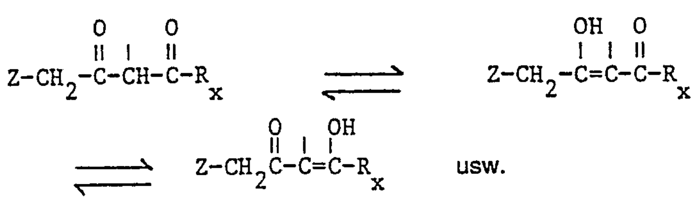 usw.

Wird eine dieser Schreibweisen benützt, dann bedeutet dies selbstverständlich den Einschluss aller möglichen tautomeren Formen.

Als Anionen $X^{\ominus}$ in den Verbindungen der Formeln (I) und (Ia) kommen für Farbstoffe übliche farblose organische und anorganische Anionen in Frage ; beispielsweise sind genannt : Chlorid, Bromid, Jodid,

Hydroxyl, Hydrogensulfat, Sulfat, Nitrat, Dihydrogenphosphat, Hydrogenphosphat, Phosphat, Carbonat, Methosulfat, Aethosulfat, Acetat, Propionat, Benzolsulfonat, Toluolsulfonat, Formiat, Lactat, Oxalat und Methoxyacetat ; es können aber auch Gemische von verschiedenen Anionen vorliegen.

Die Ladung der erfindungsgemässen Methin-azo-verbindungen der Formel (I) bzw. (Ia) ist definitionsgemäss kationisch. Da diese Verbindungen auch anionische Gruppen wie $SO_3H$— und COOH-Gruppen enthalten können, ist Bedingung, dass die Summe aller kationischen und basischen Gruppen mindestens um 1 grösser ist als die Summe aller anionischen Gruppen.

Das Brückenglied Y verbindet in Verbindungen der Formel (Ia) die beiden Ringe A. Y bedeutet beispielsweise gegebenenfalls durch N, O oder/und S unterbrochenes Alkylen, Alkenylen oder Cycloalkylen, die gegebenenfalls substituiert sind oder eine -Alkylen-Phenylen-Alkylen-Gruppe, worin Phenylen gegebenenfalls durch Halogen, Alkyl, Alkoxy oder Hydroxy substituiert sein kann. Bevorzugt verbindet das Brückenglied Y die beiden Ringe A über die jeweiligen quaternierten N-Atome.

Insbesondere bedeutet Y $C_1$-$C_8$-Alkylen, $C_2$-$C_8$-Alkenylen, Cyclohexylen, die gegebenenfalls durch Hydroxy, Halogen oder $C_1$-$C_4$-Alkoxy substituiert sind, $C_1$-$C_4$-Alkylen-Phenylen-$C_1$-$C_4$-Alkylen, worin Phenylen gegebenenfalls durch Hydroxy, Methyl, Methoxy oder Halogen substituiert ist, oder eine Gruppe der Formel

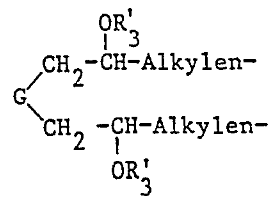

(II)

worin

$R'_3$ Wasserstoff, $C_1$-$C_4$-Alkyl, Aralkyl oder Acyl und

G 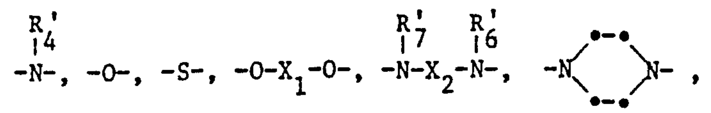

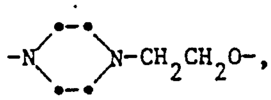 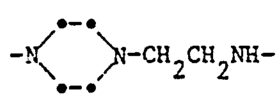 oder 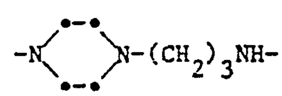

bedeuten, wobei

$R'_4$ Wasserstoff, gegebenenfalls substituiertes und gegebenenfalls durch Sauerstoff oder Schwefel unterbrochenes $C_1$-$C_{21}$-Alkyl, Cycloalkyl oder Aralkyl,

$R'_5$ und $R_7$ unabhängig voneinander gegebenenfalls substituiertes Alkyl, Phenylalkyl oder Phenyl,

$X_1$ gegebenenfalls durch —COO—,

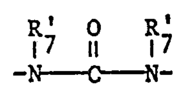

Sauerstoff oder Schwefel unterbrochenes Alkylen oder Diarylenalkylen und

$X_2$ gegebenenfalls durch

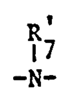

oder Sauerstoff unterbrochenes Alkylen oder Diarylenalkylen bedeuten.

Die Gruppen der Formel (II) sind in der DE-A-3136259 und DE-A-3205647 beschrieben. Der besonders bevorzugte Rest G entspricht der Formel

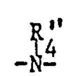

worin $R''_4$ n-Propyl, n-Butyl, iso-Butyl oder sec-Butyl bedeutet, womit Y beispielsweise ein Brückenglied der Formel

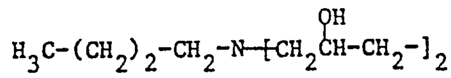

bedeutet.

Bevorzugte Brückenglieder Y sind : $C_1$-$C_4$-Alkylen,

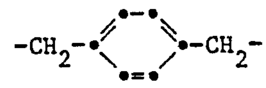

oder eine Gruppe der Formel

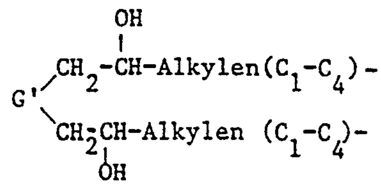

worin G' $>$N—R'$_7$ mit R'$_7$ = $C_1$-$C_8$-Alkyl bedeutet.

Die Herstellung der erfindungsgemässen Methinazoverbindungen der Formel (I) bzw. (Ia) erfolgt nach bekannter Art und Weise, beispielsweise derart, dass man Methinverbindungen der Formel

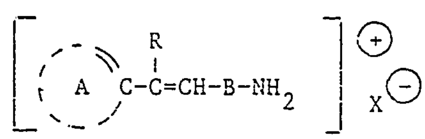

(III)

bzw.

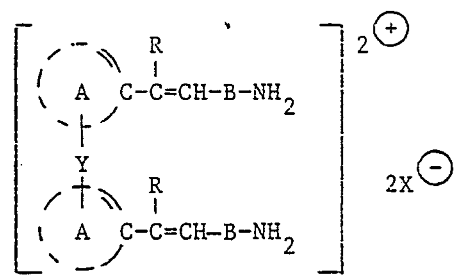

(IIIa)

diazotiert und auf eine Kupplungskomponente H—KK bzw. H—KK—H kuppelt, in welchen Formeln die Symbole A, R, B, X, Y und KK die unter der Formel (I) bzw. (Ia) angegebenen Bedeutung haben.

Enthält die entstandene Methinazoverbindung noch eine weitere diazotierbare —$NH_2$-Gruppe, so können durch erneutes Diazotieren und Kuppeln die erfindungsgemässen Farbstoffe der Formel (I) bzw. (Ia) mit m = 2 hergestellt werden.

Die Diazotierung und die Kupplungsreaktion werden in üblicher Weise durchgeführt, zweckmässig in wässrigem, saurem bis schwach alkalischem Medium.

Die erhaltenen, erfindungsgemässen Methin-azo-verbindungen werden in üblicher Weise vom Reaktionsmedium isoliert oder das Herstellungsverfahren wird so geleitet, dass sofort eine gebrauchsfertige, konzentrierte Lösung erhalten wird.

Wird die Verbindung isoliert, so erfolgt entweder Trocknung oder aus der isolierten Paste wird direkt die gewünschte Lösung hergestellt.

Die Kupplungskomponenten H — KK bzw. H—KK—H sind bekannt und können nach bekannter Art und Weise erhalten werden. Es wird auf die eingangs genannten Kupplungskomponenten KK verwiesen.

Die Methinverbindungen der obigen Formeln (III) und (IIIa) sind teilweise bekannt (z. B. : DE-A-2 161 413 ; Zhurnal Obshchei Khimii, Vol. 43, Nr. 8, Seiten 1789-1794, August 1973 ; US-A-3 185 538, US-A-3 192 195, FR-A-1 391 408, DE-A-1 248 192) oder können nach bekannter Art und Weise hergestellt werden.

Im nachfolgenden Beispielteil wird die Herstellung solcher Methinverbindungen ebenfalls beschrieben.

Man erhält diese Verbindungen beispielsweise, wenn man Quartärsalze der Formel

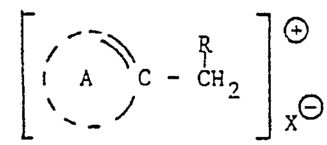

(IV)

bzw.

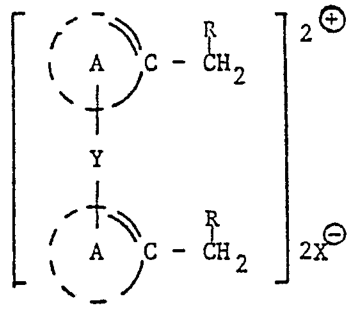

(IVa)

worin die Symbole A, Y, R und X die angegebene Bedeutung haben, mit gegebenenfalls substituierten Aminobenzaldehyden oder Aminonaphthaldehyden oder Derivaten davon (z. B. Immoniumsalzen) kondensiert.

Die Kondensation wird bei Temperaturen zwischen 20 und 140 °C, vorzugsweise zwischen 50 und 110 °C in einem organischen Lösungsmittel durchgeführt. Als solches eignen sich beispielsweise Alkohole, wie Methanol, Aethanol, die Propanole und Butanole; ferner Benzylalkohol, Essigsäureäthylester, Benzoesäuremethylester, Ameinsensäure, Essigsäure, $C_2$-$C_6$-Glykole, Dimethylformamid, Dimethylacetamid, Tetramethylharnstoff, Acetonitril und Benzonitril. Zur Beschleunigung der Kondensationsreaktion können basische Katalysatoren zugesetzt werden, wie beispielsweise Triäthylamin, Pyridin, Piperidin, N-Aethylpyridin, N-Methylmorpholin, Alkalicarbonate, Alkaliacetate und Acetate anorganischer oder organischer Stickstoffbasen wie Ammoniumacetat oder Piperidinacetat.

Zur Herstellung von Methinazoverbindungen der Formel (I) bzw. (Ia), worin m 2 bedeutet, wird nach der Kondensation die Aminogruppe einer erhaltenen Verbindung (III) bzw. (IIIa) diazotiert und auf eine Kupplungskomponente B′—$NH_2$ gekuppelt, wobei B und B′ gleich oder verschieden sein können. Anschliessend wird erneut diazotiert und auf eine Kupplungskomponente H — KK bzw. H—KK—H gekuppelt.

Die Quartärsalze der Formel (IV) bzw. (IVa) sind bekannt oder können nach bekannter Art und Weise hergestellt werden.

Die freie Aminogruppe der Aminoaldehyde kann gegebenenfalls vor der Kondensation durch eine Acetylgruppe geschützt werden, die anschliessend durch saure Verseifung wieder abgespalten wird.

Die Herstellung der erfindungsgemässen Methinazoverbindungen kann aber auch so erfolgen, dass man z. B. zuerst ein Aminobenzaldehyd oder Aminonaphthaldehyd der Formel $H\underset{\underset{O}{\|}}{C}-B-NH_2$ diazotiert und auf die Kupplungskomponente KKH oder HKKH kuppelt und die erhaltene Azoverbindung der Formel $H\underset{\underset{O}{\|}}{C}-B-N=N-KK$ mit einem Quartärsalz der Formel (IV) oder (IVa) kondensiert. Die bevorzugten Reaktionsbedingungen für die Kondensation entsprechen denjenigen, die vorstehend bei der Herstellung der Verbindungen der Formel (III) bzw. (IIIa) beschrieben werden. Die Diazotierung und Kupplung erfolgt in bekannter Weise.

Verwendung finden die Methinazoverbindungen der Formel (I) und (Ia) und die Methinverbindungen der Formel (III) und (IIIa) vor allem als Farbstoffe zum Färben und Bedrucken von kationisch färbbaren Substraten, wie Wolle, Seide, Leder, sauer modifizierten Polyamidmaterialien, Polyacrylnitrilmaterialien, basisch färbbaren, modifizierten Polyestermaterialien, natürlichen und regenerierten Cellulosematerialien wie Baumwolle und Viscose, wobei diese Verbindungen ein gutes Ziehvermögen aufweisen und man brillante Ausfärbungen erhält, die gute Echtheiten aufweisen; sie sind besonders durch ihre hohe Farbstärke gekennzeichnet.

Eine bevorzugte Verwendung der erfindungsgemässen Methin-azo-farbstoffe der Formel (I) und (Ia) liegt in der Anwendung zum Färben von Papier aller Arten, vor allem von gebleichtem, ungeleimtem und geleimtem ligninfreien Papier. Ganz besonders geeignet sind die Verbindungen zum Färben von ungeleimtem Papier (Tissues) als Folge ihrer sehr hohen Standard-Affinität zu diesem Substrat.

Die erfindungsgemässen Methinazoverbindungen ziehen sehr gut auf diese Substrate, wobei die Abwasser farblos bleiben, was ein grosser technischer und ökologischer Vorteil, insbesondere im

Hinblick auf die heutigen Abwassergesetzte ist. Der gute Ausziehgrad ist auch für eine gute Reproduzierbarkeit der Nuance von Vorteil. Der Ausziehgrad wird von der Wasserhärte nicht beeinflusst. Die Papier-Färbungen sind vor allem gekennzeichnet durch ihre Farbstärke, Lichtechtheit und hohe Affinität; sie zeigen keine Neigung zum Ausbluten, wenn gefärbtes Papier in nassem Zustand mit feuchtem weissem Papier in Berührung gebracht wird. Diese Eigenschaft ist besonders für sogenannte « Tissues » erwünscht, bei denen vorhersehbar ist, dass das gefärbte Papier in nassem Zustand (z. B. getränkt mit Wasser, Alkohol, Tensid-Lösung) in Berührung mit anderen Flächen, z. B. wie aus Textilien oder Papier, kommt, die gegen Verschmutzung geschützt werden müssen.

Die hohe Affinität für Papier und die grosse Ausziehgeschwindigkeit der erfindungsgemässen Methinazoverbindungen ist für das Kontinue-Färben von Papier von grossem Vorteil, und ermöglicht somit einen sehr breiten Einsatz.

Die Methinazofarbstoffe werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, Natriumphosphat, Natriumchlorid, Natriumacetat in Gegenwart von Entstäubungsmitteln eingesetzt, oder die Methin-azo-farbstoffe werden als Sprühtrocknungspräparationen in den Handel gebracht. Konzentrierte Lösungen können wässriger oder organisch/wässriger Art sein, wobei übliche Zusätze, wie organische Säuren, z. B. Essigsäure, Ameisensäure, Milchsäure, Amide wie Formamid, Dimethylformamid, Harnstoff, Alkohole wie Glykol, Diglykol, Diglykoläther vor allem der Methyl- oder Aethyläther bevorzugt werden.

Eine günstige Zusammensetzung solcher flüssigen Präparate ist beispielsweise die folgende

100 Teile einer Merhinazoverbindung der Formel (I) bzw (Ia),

1-100 Teile einer organischen Säure, wie Ameisen-, Essig-, Milch-, Zitronensäure,

100-800 Teile Wasser, und

0-500 Teile eines Lösungsvermittlers (z. B. Glykole wie Diäthylenglykol, Triäthylenglykol, Hexylenglykol, Glykoläther wie Methylcellosolve, Methylcarbitol, Butylpolylglykol, Harnstoff, Formamid, Dimethylformamid).

Aus der FR-A-1 257 255 sind bereits Methinazofarbstoffe bekannt, jedoch keine Verbindungen, welche zwei oder mehr Azogruppen enthalten.

Die nachfolgenden Beispiele veranschaulichen die Erfindung sowie die Herstellung der Ausgangsprodukte weiter. Teile- und Prozentangaben beziehen sich darin auf das Gewicht, sofern nichts anderes angegeben ist.

A) AUSGANGSPRODUKTE

Beispiel 1

a) 85,8 g N-Methyl-4-methyl-pyridiniumchlorid und 103,1 g 4-Acetamino-benzaldehyd werden in 720 ml Isopropanol bei Raumtemperatur suspendiert. Man gibt 10 ml Piperidin hinzu und erhitzt 2 Stunden lang auf Rückfluss. Man lässt zunächst unter Rühren auf Raumtemperatur abkühlen und kühlt schliesslich noch im Eisbad. Dann wird die gelblichbraune Kristallmasse abgenutscht und mit total 150 ml kaltem Isopropanol nachgewaschen. Nach der Trocknung erhält man 155 g eines gelben Kristallpulvers.

b) 57,7 g des nach a) erhaltenen Pulvers werden in einer Lösung aus 200 ml Wasser und 200 ml Salzsäure (32 %) 1 Stunde lang auf Rückfluss erhitzt. Die entstandene gelbe Lösung wird nach dem Erkalten mit Wasser auf ein Gewicht von 493 g eingestellt. Diese Lösung wird telquel zur Diazotierung eingesetzt, sie enthält die Verbindung der Formel

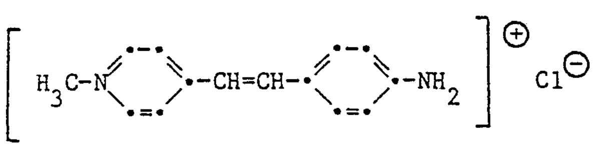

Beispiel 2-13

Ersetzt man im Beispiel 1a) das N-Methyl-4-methylpyridinium-chlorid durch die in Tabelle 1, Kol. II aufgeführten Quartärsalze und verfährt im übrigen analog zu Beispiel 1, so erhält man die in Kol. III angegebenen Produkte.

(Siehe Tabelle I Seite 27 ff.)

Tabelle I

| I | II | III |
|---|---|---|
| Bsp. | Quartärsalze | Produkte R = 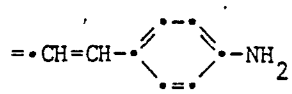 |
| 2 | 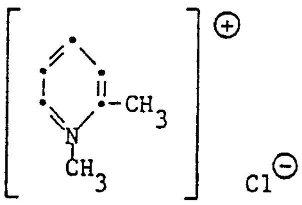 | 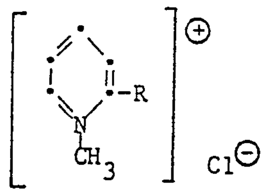 |
| 3 | 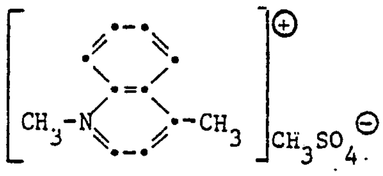 | 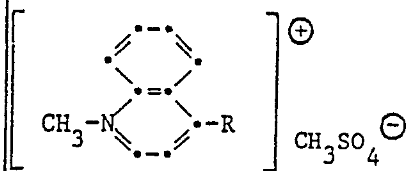 |
| 4 | 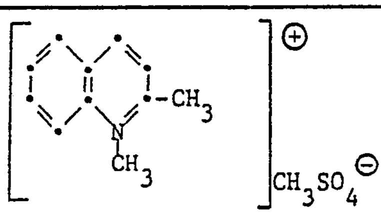 | 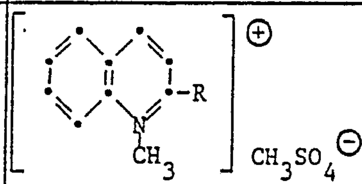 (liegt als Suspension vor) |
| 5 | 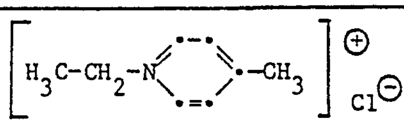 | 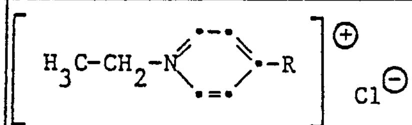 |
| 6 | 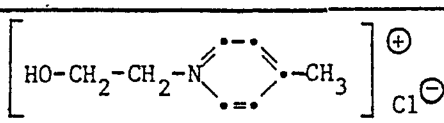 | 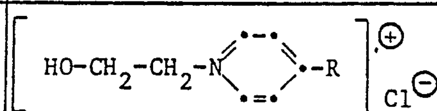 |
| 7 | 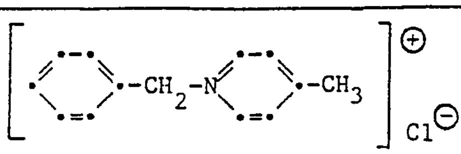 | 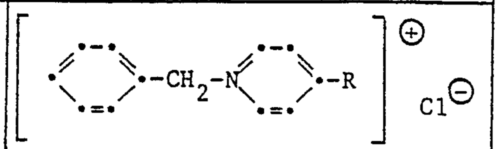 |
| 8 | 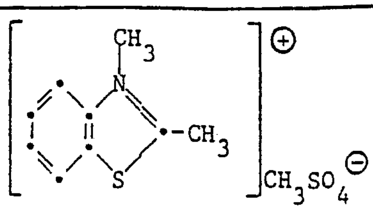 | 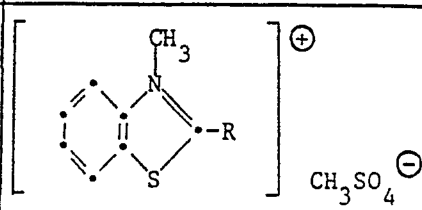 |

Tabelle I (Fortsetzung)

| I | II | III |
|---|---|---|
| Bsp. | Quartärsalze | Produkte R = -CH=CH- 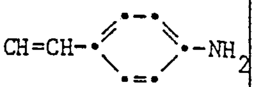 |
| 9 | 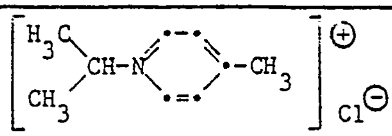 | 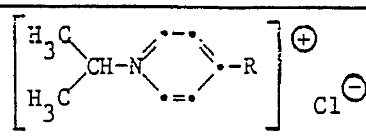 |
| 10 | 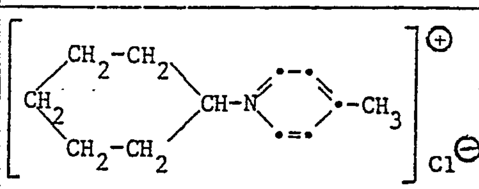 | 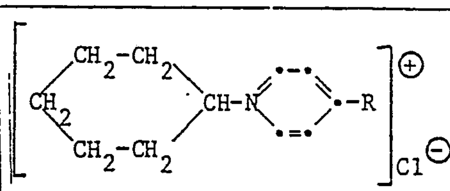 |
| 11 | 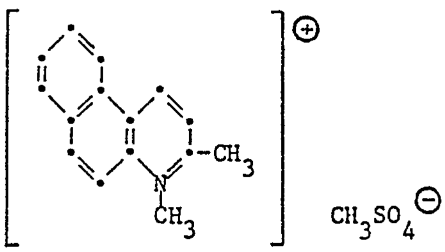 | 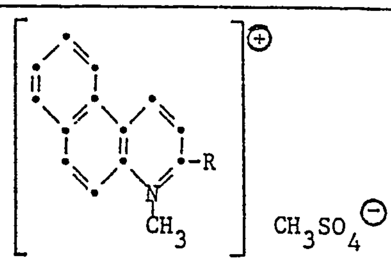 |
| 12 | 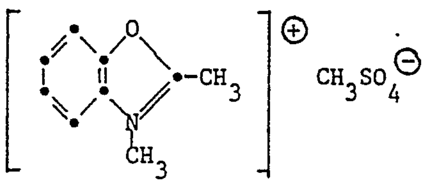 | 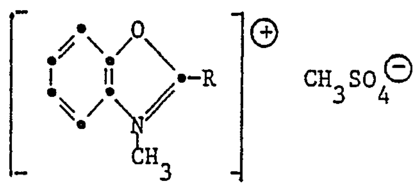 |
| 13 | 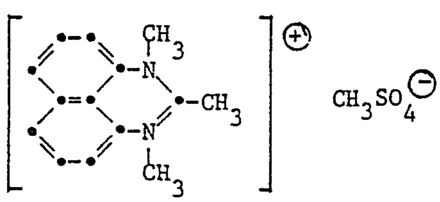 | 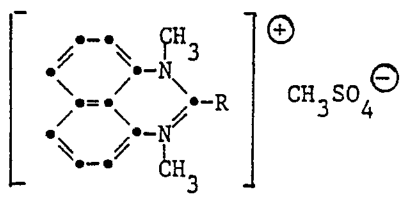 |
| 13a | 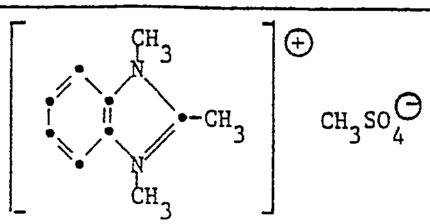 | 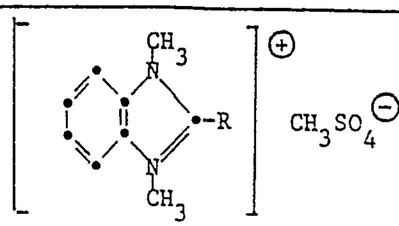 |

Beispiel 14

24,5 g des Hydrochlorids der Chlor-Fischerbase (1,2,3,3-Tetramethyl-5-chlorindolenins) und 17,3 g 4-Acetaminobenzaldehyd werden in 750 ml n-Butanol 1 Stunde lang auf Rückfluss erhitzt. Die intensiv rote Lösung wird am Rotationsverdampfer auf ein Volumen von ca. 200 ml eingeengt und nach dem Erkalten mit ca. 600 ml Aether gefällt. Das ausgefallene Produkt wird abfiltriert, mit Aether gewaschen und getrocknet. Man erhält 41,3 g eines roten Pulvers. Dieses wird in 400 ml Wasser und 400 ml konz. Salzsäure eine Stunde lang am Rückfluss erhitzt. Nach dem Erkalten wird filtriert, mit Wasser gewaschen und getrocknet.

Man erhält 22,15 g des Ausgangsproduktes der Formel

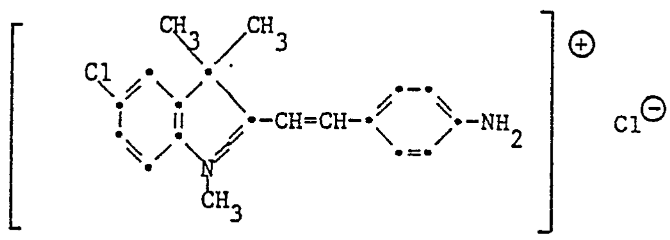

Beispiel 15

Analog zu Beispiel 14 wird aus der Fischerbase die Verbindung der Formel

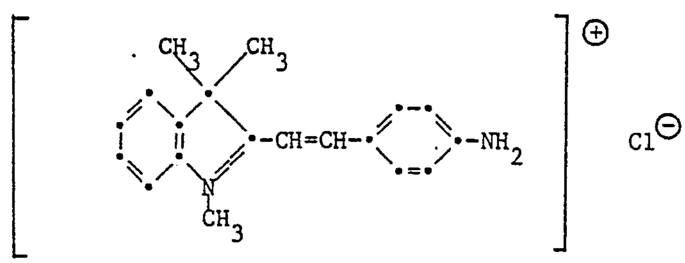

hergestellt.

Beispiel 16

103,2 ml der in Beispiel 1b) beschriebenen Lösung werden bei 0-5 °C mit 10 ml einer 4 normalen Natriumnitrit-Lösung diazotiert. Man rührt eine halbe Stunde bei 0-5 °C nach und korrigiert einen eventuellen leichten Nitritüberschuss mit Sulfaminsäure.

Diese Diazolösung wird in eine Lösung von 5,5 g 3-Amino-4-methoxytoluol in 50 ml Wasser und 8,4 ml Salzsäure (32 %) eingetragen. Der pH der dabei entstehenden orangen Lösung wird mit konzentrierter Sodalösung innerhalb ca. 15 Minuten auf 4 gestellt und das Reaktionsgemisch noch 2 Stunden bei Raumtemperatur nachgerührt. Die braune Suspension wird dann abfiltriert und zweimal mit 5 %-iger Sole gewaschen. Nach dem Trocknen erhält man 16,95 g eines schwarzen Pulvers, das zu 96 % (Nitrittiter) aus dem Ausgangsprodukt der Formel

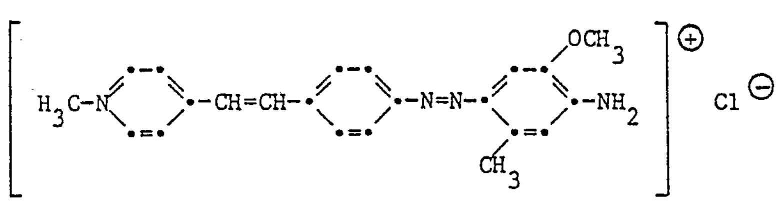

besteht. Diese Verbindung eignet sich aber ausserdem bereits als Farbstoff, indem sie Papier in einem sehr intensiven rotbraunen Ton färbt.

Beispiel 17

In eine Mischung aus 9,3 T Epichlorhydrin und 0,7 ml Wasser werden unter Kühlung langsam 3,7 g n-Butylamin so zugetropft, dass eine Temperatur von 30-35 °C nicht überschritten wird. Nach beendeter Zugabe lässt man 5 Stunden bei 30 °C nachrühren, wärmt dann auf 95 °C auf und tropft 19,6 g γ-Picolin so zu, dass die Temperatur 110° nicht übersteigt. Man hält weitere 4 Stunden bei 110 °C, tropft dann 40 ml n-Butanol zu und lässt kaltrühren. Man erhält 69 g einer orangen Lösung des Produktes der Formel :

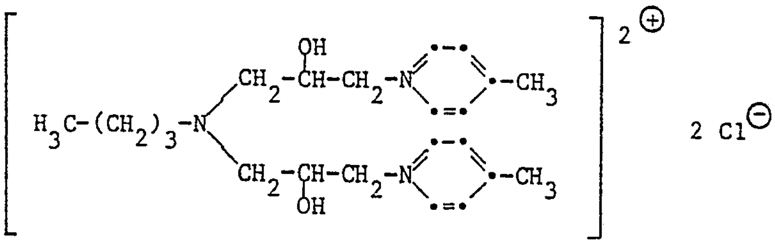

34,5 g dieser butanolischen Lösung werden mit weiteren 22 ml n-Butanol, mit 17,1 g 4-Acetaminobenzaldehyd und 2 ml Piperidin versetzt, auf Rückfluss erhitzt und 1 1/2 Stunden bei dieser Temperatur gehalten.

Nach dem Kaltrühren tropft man langsam 140 ml Aether zu, filtriert dann die feine, braune Suspension und wäscht gut mit Aether nach. Nach der Trocknung erhält man 18,8 g eines gelbbraunen Pulvers.

11,0 g dieses Pulvers werden in 37,5 ml 4 N Salzsäure 1 Stunde lang auf Rückfluss erhitzt. Nach dem Erkalten wird die dicke, orangebraune Paste mit Wasser auf ein Gewicht von 97,5 g eingestellt und kurz aufgekocht. Nach dem erneuten Erkalten liegt eine dicke Suspension vor mit einem Gehalt von 8,8 % (Nitrittiter) des Ausgangsproduktes der Formel

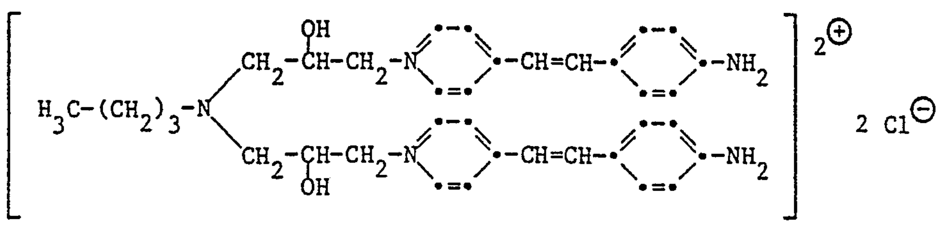

Beispiel 18

50 g 1,4-Bis-(chlormethyl)-benzol und 53,2 g γ-Picolinwerden in 383 ml n-Butanol 6 Stunden lang auf Rückfluss erhitzt. Nach Kaltrühren über Nacht wird abfiltriert und zuerst mit n-Butanol, dann mit Aether gewaschen. Nach der Trocknung erhält man 84,2 g eines weissen Pulvers der Formel

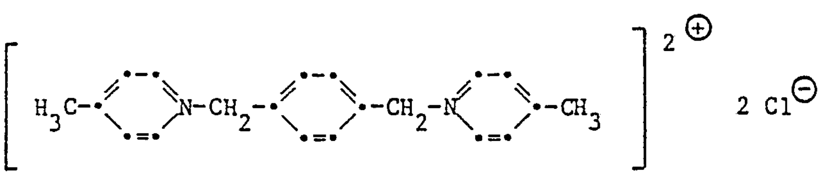

21,7 g dieses Pulvers werden mit 20,0 g 4-Acetaminobenzaldehyd in 200 ml Isopropanol unter Hinzufügen von 2 ml Piperidin 1/2 Stunde lang auf Rückfluss erhitzt. Nach dem Erkalten wird die Mutterlauge abdekantiert und der harzförmige Rückstand in 150 ml heissem Wasser gelöst.

Man gibt 15 g Kochsalz zu und lässt kaltrühren. Die gelatinierte Masse wird am nächsten Tag im Mixer mit 150 g Eis und 50 ml 25 %-iger Sole zerkleinert und anschliessend filtriert. Nach der Trocknung liegen 35,5 g dunkelbraunes Pulver vor. Dieses Pulver wird in 218 ml 4 N Salzsäure eine Stunde lang unter Rückfluss erhitzt. Es bildet sich eine schwer rührbare gelbe Gallerte. Nach dem Kaltrühren wird mit ca. 2,5 ml Wasser am Zahnscheibenrührer verrührt und auf 60° aufgeheizt. Mit total 130 g krist. Na-acetat wird auf pH 5 gestellt und auf einer grossen vorgeheizten Nutsche filtriert. Das Filtrat wird nach dem Erkalten noch insgesamt 4 mal durch ein Faltenfilter klarfiltriert. Schliesslich erhält man 1 870 g einer orangefarbenen Lösung die 8,8 g (Nitrittiter) des Ausgangsproduktes der Formel

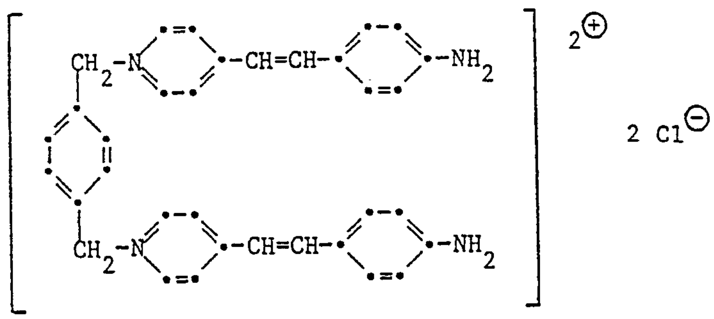

enthält.

Beispiel 19

47,5 g 4-Picolin werden mit 150 ml Isopropanol und 81,3 g Phenacylchlorid in einem Autoklaven 3 Stunden auf 150 °C erhitzt. Nach dem Abkühlen wird die braune Suspension filtriert und gut mit Aether gewaschen. Nach der Trocknung erhält man 113 g eines beigen Kristallpulvers.

49,5 g dieses Pulvers werden in 240 ml Isopropanol mit 34,3 g 4-Acetaminobenzaldehyd und 3,5 ml Piperidin 32 Stunden auf Rückfluss erhitzt. Nach Abkühlen im Eisbad wird filtriert und der Rückstand mit wenig Isopropanol nachgewaschen. Der Rückstand wird in 300 ml n-Butanol rekristallisiert; man erhält 44,6 g eines rotbraunen Pulvers.

19,6 g dieses Pulvers werden in 50 ml heissem Eisessig gelöst und dann mit 50 ml Wasser und 50 ml 32 %-iger Salzsäure versetzt. Nach einer Stunde Rückfluss lässt man kaltrühren, kühlt dann im Eisbad, filtriert und wäscht mit wenig kaltem Wasser nach. Nach Trocknung erhält man 9,3 g der Verbindung der Formel

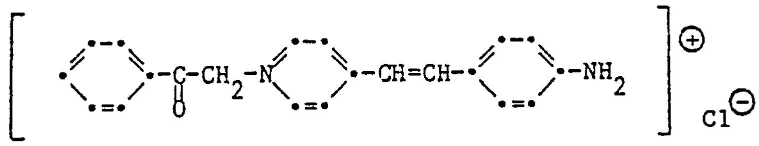

Beispiel 20

5,5 g N-Methyl-4-methyl-pyridiniumchlorid, 5 g 2-Aminobenzaldehyd und 0,65 ml Piperidin werden in 75 ml Isopropanol 5 Stunden lang unter Rückfluss erhitzt. Dann werden während einer weiteren Stunde ca. 70 ml Lösungsmittel abdestilliert. Zum erkalteten, öligen Rückstand tropft man unter Rühren langsam 400 ml Aceton und rührt eine Nacht lang nach. Der teils kristalline, teils schmierige Rückstand wird abfiltriert, erneut in 20 ml Methanol gelöst, klarfiltriert und wieder mit 1 l Aceton gefällt. Der ausgefallene Rückstand wird filtriert und getrocknet. Man erhält 4,5 g der Verbindung der Formel

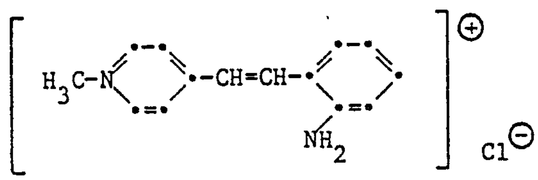

B) ENDPRODUKTE

Beispiel 21

Man diazotiert die Verbindung gemäss Beispiel 1b und giesst dann auf 0,28 g Resorcin in 15 ml Wasser. Der pH wird dann mit 2 N Natronlauge auf 7,0 gestellt und 2 Stunden lang bei Raumtemperatur gerührt. Man filtriert ab und wäscht mit wenig 5 %-iger Na Cl-Lösung nach. So erhält man nach dem Trocknen 1,7 g eines dunkelbraunen Farbstoffgemisches, dessen Hauptkomponente der Formel

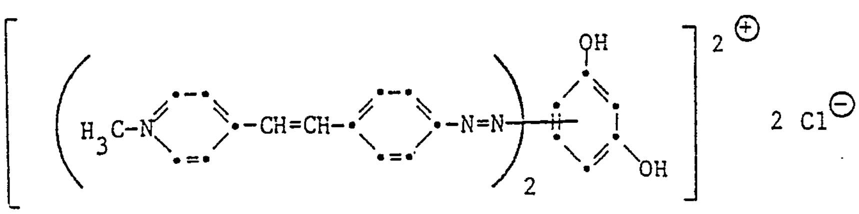

entspricht. Schmelzpunkt : > 290 °C. Der Farbstoff ist hervorragend wasserlöslich und färbt Papier in einer rotbraunen Nuance.

Beispiel 22

Man diazotiert die Verbindung gemäss Beispiel 1b und giesst auf eine Lösung von 0,8 g der Verbindung der Formel

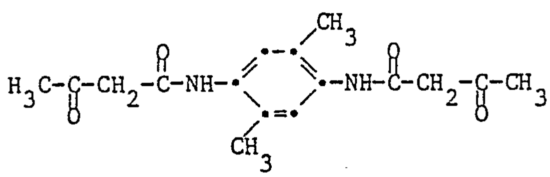

in 15 ml Dimethylformamid und 5 ml Wasser. Der pH wird mit konz. Sodalösung auf 5 gestellt und die orange Suspension 3 Stunden bei Raumtemperatur gerührt. Man filtriert, wäscht mit 5 %-iger NaCl-Lösung nach und trocknet. Es werden 2,2 g eines rotbraunen Pulvers erhalten, das der Formel

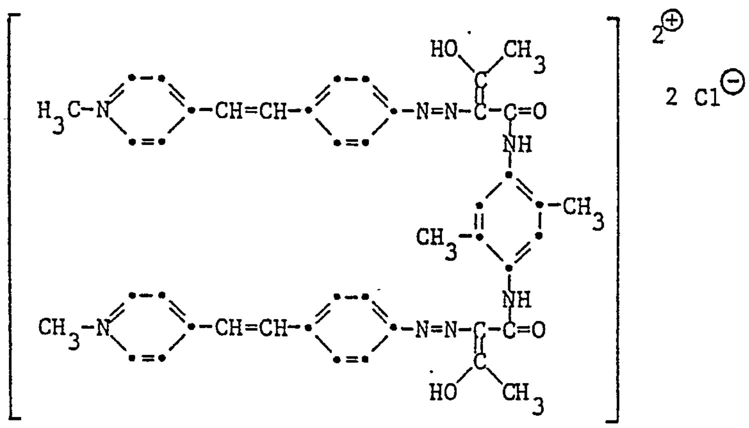

entspricht und Papier in einer reinen goldgelben Nuance färbt.

Beispiele 23-28

Folgende Farbstoffe lassen sich in analoger Weise zu Beispiel 22 herstellen, wenn man die entsprechenden Bis-acetoacetyl-Kupplungskomponenten einsetzt :

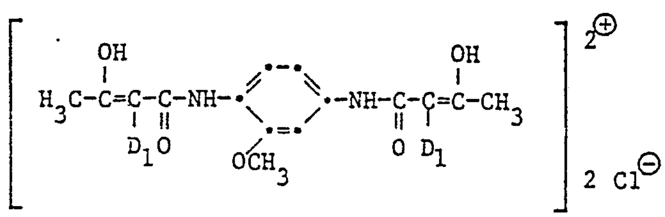

Beispiel 23
orange

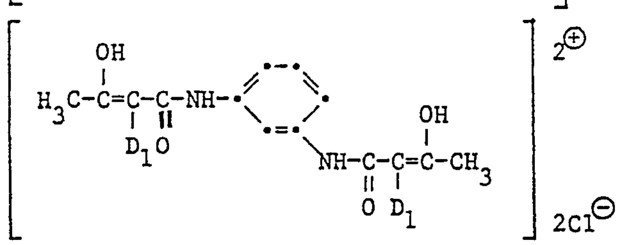

Beispiel 24
gelb

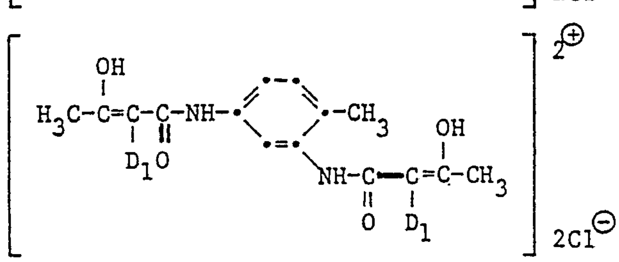

Beispiel 25
gelb

(Fortsetzung)

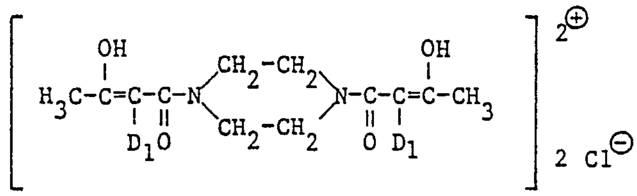

Beispiel 26
gelb

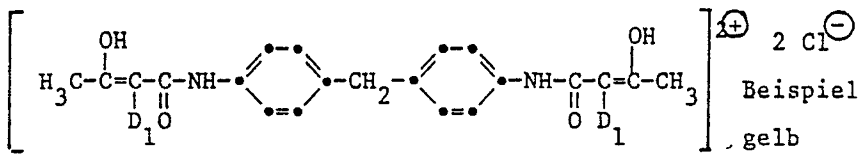

Beispiel 27
gelb

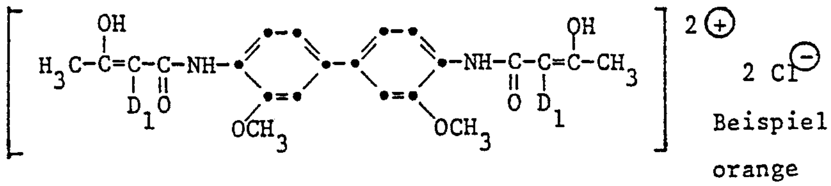

Beispiel 28
orange

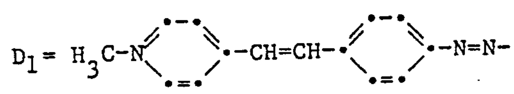

Beispiel 29

2 g des Ausgangsproduktes gemäss Beispiel 16 werden in 20 ml Wasser und 5 ml Salzsäure (32 %) suspendiert und auf 0-5 °C gekühlt. Nach Zugabe von 4,8 ml 1 N Natriumnitritlösung geht die Diazoverbindung in Lösung. Sie wird nun zu einer Lösung von 0,6 g 2,4,6-Triaminopyrimidin in 15 ml Wasser zugegeben und der pH mit konz. Sodalösung auf 5 gestellt. Nach 2-stündigem Nachrühren wird abfiltriert und mit 5 %-iger NaCl-Lösung gewaschen. Man erhält 2,9 g des Farbstoffes der Formel

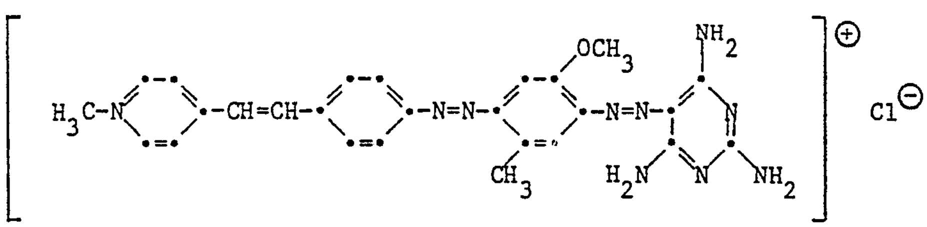

Dieser färbt Papier in einem sehr intensiven Violettbraun.
Schmelzpunkt : 260-265 °C.

Beispiel 30

187 g der Lösung gemäss Beispiel 18 werden mit 3,3 ml Salzsäure (32 %), auf 0-5 °C gekühlt und mit 3,1 ml 1 N Natriumnitritlösung diazotiert. Nach einer halben Stunde Nachrührzeit bei 0-5 °C wird diese Diazolösung zu einer Lösung von 0,4 g Barbitursäure in 15 ml Dimethylformamid und 15 ml Wasser gegossen. Der pH wird sodann mit konz. Sodalösung auf 5 gestellt. Nach einer halben Stunde Nachrührzeit wird filtriert, mit wenig 5 %-iger Sole nachgewaschen und getrocknet.

Man erhält 1,45 g des Farbstoffes der Formel

(Siehe Formel Seite 34 f.)

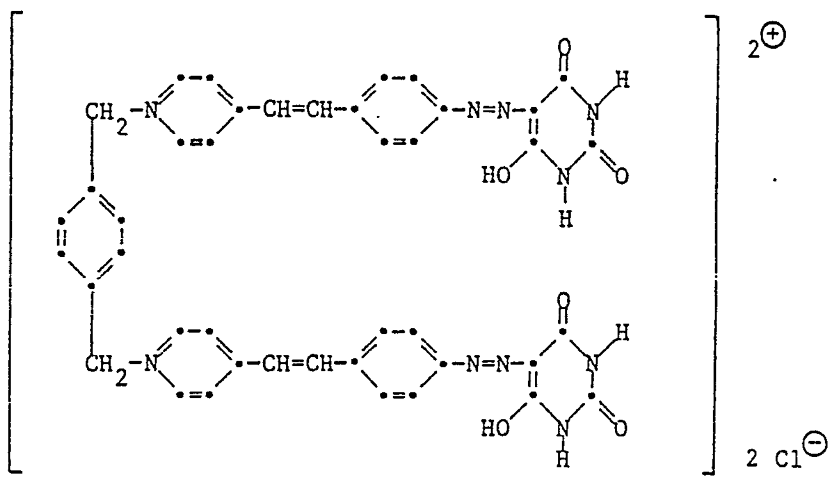

Erfärbt Papier in einer gelben Nuance.

## Beispiel 31

16,3 g der salzsauren Suspension gemäss Beispiel 17 wird bei 0-5 °C mit 4,4 ml 1 N Natriumnitritlösung diazotiert. Die erhaltene Suspension wird nun zu einer Lösung von 0,57 g Barbitursäure, gelöst in 15 ml Dimethylformamid und 15 ml Wasser, gegossen und der pH mit konz. Sodalösung auf 5 gestellt. Es entsteht eine braune Suspension. Diese wird 1/2 Stunde bei Raumtemperatur nachgerührt und anschliessend mit 50 ml gesättigter NaCl-Lösung versetzt. Dann wird abfiltriert und mit etwas gesättigter Na Cl-Lösung nachgewaschen.

Nach dem Trocknen erhält man 3,2 g eines ockerbraunen, salzhaltigen Pulvers, dessen Farbstoff der Formel

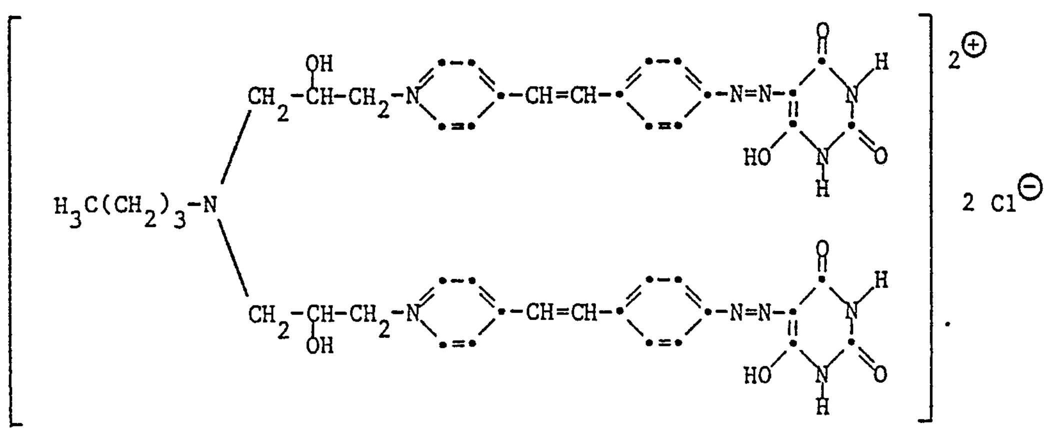

entspricht und der Papier in einer goldgelben Nuance färbt.

## Beispiel 32

Ersetzt man in Beispiel 21 das Ausgangsprodukt gemäss Beispiel 1b durch das Ausgangsprodukt gemäss Beispiel 2, so erhält man den Farbstoff der Formel

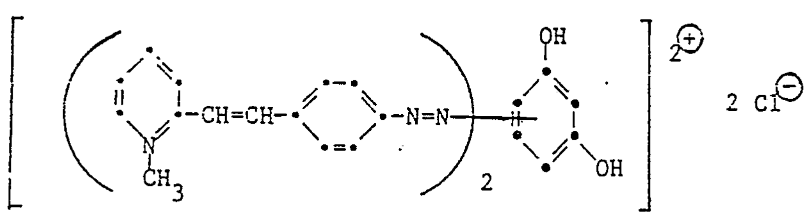

Nuance auf Papier : rotbraun.

Beispiel 33

Ersetzt man in Beispiel 23 das Ausgangsprodukt gemäss Beispiel 1b durch jenes gemäss Beispiel 2, so erhält man den Farbstoff der Formel

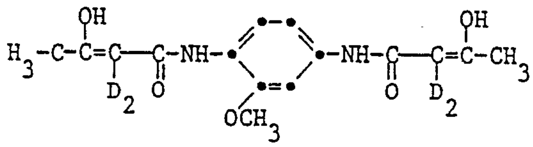

mit $D_2$ =

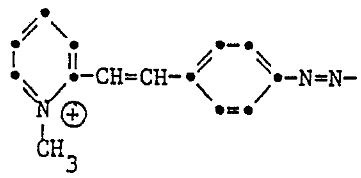

Nuance auf Papier : gelb.

Beispiel 34

1,95 g des Ausgangsproduktes gemäss Beispiel 14 werden in 20 ml Wasser und 1,5 ml konz. Salzsäure suspendiert und mit 5 ml 1 N Natriumnitritlösung bei 0-5 °C diazotiert. Nach einer halben Stunde Nachrührzeit bei 0-5 °C wird die Diazolösung zu einer Lösung von 1,75 g der Verbindung der Formel

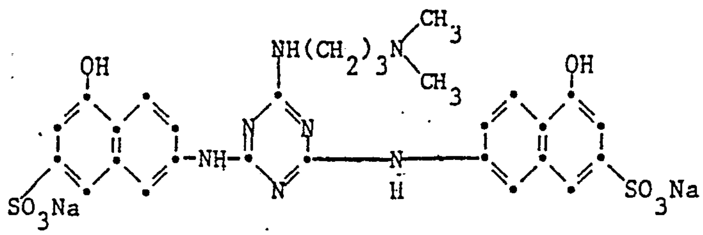

gelöst in 20,5 ml Wasser gegossen und der pH mit konz. Sodalösung auf 6 gestellt. Nach 1 1/2 Stunden ist die Kupplung beendigt. Man filtriert ab und Wäscht mit etwa 5 % Sole nach. Nach der Trocknung erhält man 3,6 g des Farbstoffes der Formel

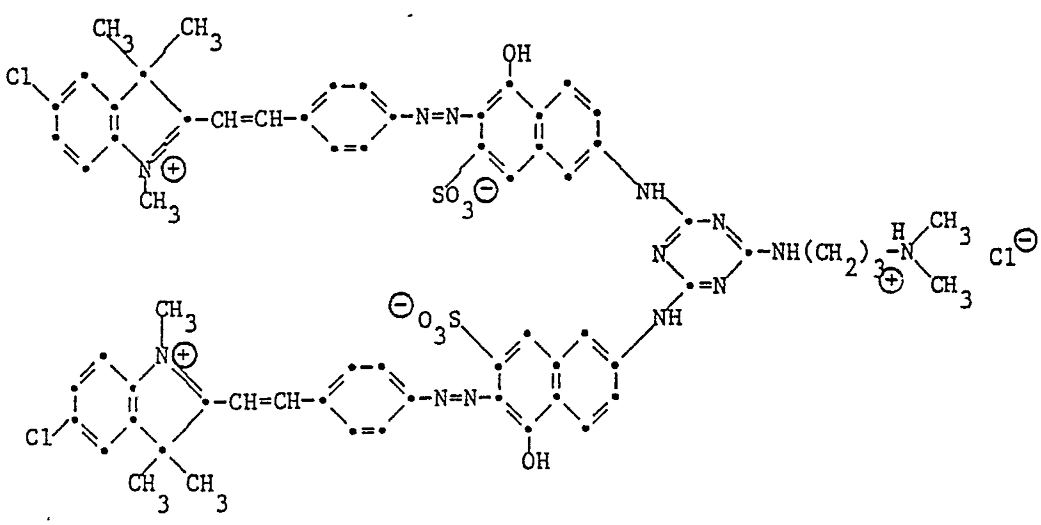

Er färbt Papier in einer violett-blauen Nuance.

Beispiel 35

0,2 g des gemäss Beispiel 22 hergestellten Farbstoffes werden mit 2 g 40 %-iger wässriger Essigsäure angeteigt und durch Zugabe von 4 000 ml heissem Wasser in Lösung gebracht. Man setzt noch 1 g Natriumacetat und 2 g eines mit Dimethylsulfat quaternisierten Anlagerungsproduktes von 15 bis 20 Aequivalenten Aethylenoxid an N-Octadecyldiäthylentriamin zu und geht mit 100 g Polyacrylnitrilgewebe bei 60 °C ein. Innerhalb 30 Minuten erhitzt man das Bad auf 100 °C und färbt dann kochend während 90 Minuten. Hierauf lässt man die Flotte im Verlauf von 30 Minuten bis auf 60 °C abkühlen. Das so gefärbte Material wird dann herausgenommen und anschliessend mit lauwarmem und kaltem Wasser gespült. Man erhält ein gelb gefärbtes Polyacrylnitrilgewebe. Die Färbung weist eine gute Lichtechtheit auf.

Beispiel 36

Ein Polyacrylnitril-Mischpolymerisat bestehend aus 93 % Acrylnitril und 7 % Vinylacetat wird in Dimethylacetamid zu 15 % gelöst. Die Spinnflüssigkeit wird in ein Spinnbad extrudiert, welches aus 40 % Dimethylacetamid und 60 % Wasser besteht. Anschliessend wird das entstandene Spinnkabel nach bekannten Methoden verstreckt und durch Spülen mit heissem und kaltem Wasser vom Dimethylacetamid befreit.

Dieses nasse Spinnkabel wird durch Tauchen in einem Bad von 42 °C folgender Zusammensetzung gefärbt:

4,5 g/l Farbstoff gemäss Beispiel 30
pH 4,5 mit Essigsäure.

Die Kontaktzeit Faserkabel-Färbeflotte beträgt 3-5 Sekunden. Anschliessend wird die überschüssige Farbflotte abgequetscht und das Spinnkabel dem Trockner zugeführt. Es resultiert ein gelb gefärbtes Faserkabel mit guten Echtheiten.

Beispiel 37

Man bereitet eine Druckpaste, bestehend aus:

10 g des gemäss Beispiel 27 erhaltenen Farbstoffes,
30 g Thiodiglykol,
20 ml Essigsäure (80 %-ig),
350 ml kochendem Wasser,
500 g Johannisbrotkernmehlverdickung,
30 g Weinsäure,
15 g Di-(β-cyanäthyl)-formamid und
30 g eines Naphthalinsulfonsäureformaldehyd-Kondensationsproduktes.

Ein mit dieser Druckpaste bedrucktes Polyacrylnitril-Gewebe wird danach auf einem HT-Hängeschleifendämpfer 20 bis 30 Minuten bei 101° bis 103 °C fixiert und wie üblich fertiggestellt. Man erhält einen gelben Druck.

Beispiel 38

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispeil 21 unter starker Turbulenz dem Dünnstöff kontinuierlich zudosiert (0,2 %-ige Färbung, Flottenverhältnis 1 : 400, Wasserhärte 10° dH, pH 6, Temperatur 20 °C).

Es entsteht auf der Papierbahn eine rotbraune Nuance. Das Abwasser ist völlig farblos.

Beispiel 39

Man vermischt 50 g chemisch gebleichtes Buche-Sulfit mit 50 g gebleichtem Fichtesulfit (Mahlgrad 22° SR) und 0,2 g des Farbstoffes gemäss Beispiel 31 in Wasser (pH 6, Wasserhärte 10° dH, Temperatur 20 °C, Flottenverhältnis 1 : 40). Nach 15-minütigem Rühren werden Papierblätter auf einem Frank-Blattbildner hergestellt.

Das Papier ist in einer goldgelben Nuance gefärbt. Das Abwasser ist völlig farblos. Der Ausziehgrad erreicht praktisch 100 %. Die Nassechtheiten sind ausgezeichnet.

Setzt man in den Beispielen 35 bis 39 die übrigen Verbindungen gemäss den Beispielen 21-34 als Farbstoffe ein, so erhält man ebenfalls gute und echte Färbungen auf den jeweiligen Substraten.

## Patentansprüche

1. Methinazoverbindungen der Formeln

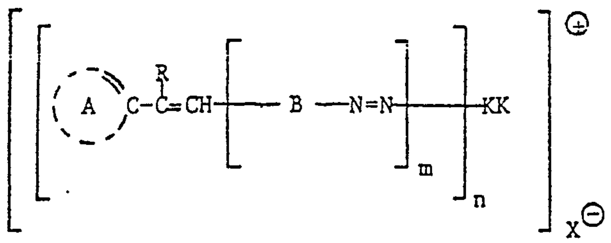

(I)

und

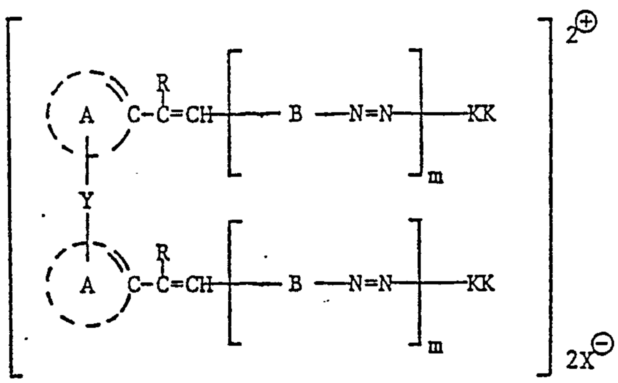

(Ia)

worin

A die Ergänzung zu einem heterocyclischen 5- oder 6-gliedrigen Ring mit einem quaternierten N-Atom als Ringglied, der weitere Heteroatome enthalten kann und der gegebenenfalls substituiert und/oder mit carbo- oder heterocyclischen Ringen kondensiert sein kann,

R Wasserstoff, Cyano oder $C_2$-$C_3$-Alkylen, das mit einem N-Atom des Ringes A zu einem 5- oder 6-gliedrigen Ring verbunden ist,

B gegebenenfalls substituiertes Phenylen oder Naphthylen,

m und n unabhängig voneinander die Zahlen 1 oder 2, wobei in Formel (I) mindestens eines der beiden Symbole m und n für die Zahl 2 steht, wobei im Falle m = 2 die beiden B gleich oder verschieden sind,

KK den Rest einer Kupplungskomponente,

X⊖ ein Anion und Y ein Brückenglied bedeuten.

2. Methinazoverbindungen nach Anspruch 1, worin R Wasserstoff bedeutet.

3. Methinazoverbindungen nach Anspruch 1 oder 2, worin B Phenylen, vorzugsweise 1,4-Phenylen, bedeutet.

4. Methinazoverbindungen nach einem der Ansprüche 1-3, worin m 1 und n 2 bedeutet.

5. Methinazoverbindungen nach einem der Ansprüche 1-3, worin Y gegebenenfalls durch N, O oder/und S unterbrochenes Alkylen, Alkenylen oder Cycloalkylen, die gegebenenfalls substituiert sind, oder eine -Alkylen-Phenylen-Alkylen-Gruppe bedeutet, worin Phenylen gegebenenfalls durch Halogen, Alkyl, Alkoxy oder Hydroxy substituiert sein kann.

6. Methinazoverbindungen nach einem der Ansprüche 1-5, worin Y die beiden Ringe A über die jeweiligen quaternierten N-Atome verbindet.

7 Methinazoverbindungen nach Anspruch 5 oder 6, worin Y $C_1$-$C_8$-Alkylen, $C_2$-$C_8$-Alkenylen, Cyclohexylen, die gegebenenfalls durch Hydroxy, Halogen oder $C_1$-$C_4$-Alkoxy substituiert sind, $C_1$-$C_4$-Alkylen-Phenylen-$C_1$-$C_4$-Alkylen, worin Phenylen gegebenenfalls durch Hydroxy, Methyl, Methoxy oder Halogen substituiert ist, oder eine Gruppe der Formel

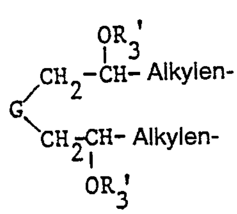

bedeutet, worin

$R'_3$ Wasserstoff, $C_1$-$C_4$-Alkyl, Aralkyl oder Acyl und

G 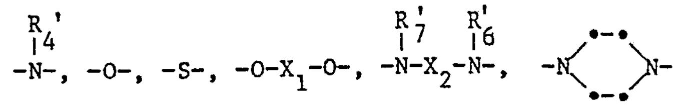

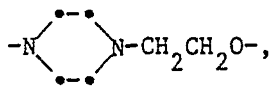 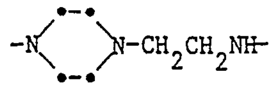 oder 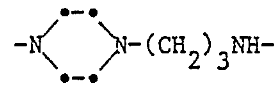

bedeuten, wobei

$R'_4$ Wasserstoff, gegebenenfalls substituiertes und gegebenenfalls durch Sauerstoff oder Schwefel unterbrochenes $C_1$-$C_{21}$-Alkyl, cycloalkyl oder Aralkyl,

$R'_6$ und $R'_7$ unabhängig voneinander gegebenenfalls substituiertes Alkyl, Phenylalkyl oder Phenyl,

$X_1$ gegebenenfalls durch —COO—,

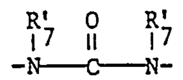

Sauerstoff oder Schwefel unterbrochens Alkylen oder Diarylenalkylen und

$X_2$ gegebenenfalls durch

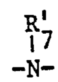

oder Sauerstoff unterbrochenes Alkylen oder Diarylenalkylen bedeuten.

8. Methinazoverbindungen nach Anspruch 7, worin Y $C_1$-$C_4$-Alkylen,

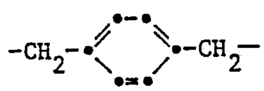

oder eine Gruppe der Formel

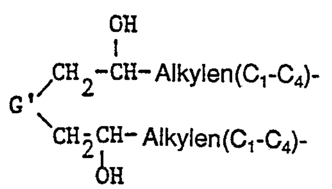


bedeutet, worin G' $\geq$N—$R'_7$ mit $R'_7$ = $C_1$-$C_8$-Alkyl bedeutet.

9. Methinazoverbindungen nach einem der Ansprüche 1-8, worin A die Ergänzung zu einem quaternierten, gegebenenfalls substituierten oder/und mit carbocyclischen Ringen kondensierten Pyridin-, Pyrimidin-, Chinolin-, Thiazol-, Imidazol-, Oxazol- oder Pyrrolring bedeutet.

10. Methinazoverbindungen nach Anspruch 9, worin A die Ergänzung zu einem quaternierten, gegebenenfalls substituierten oder/und mit carbocyclischen Ringen kondensierten Pyridinring bedeutet.

11. Methinazoverbindungen nach Anspruch 9, worin A die Ergänzung zu einem der folgenden Ringe

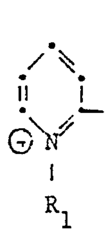 , 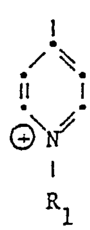 , 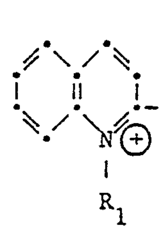 , 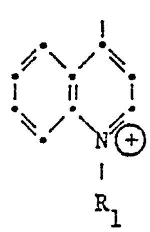 , 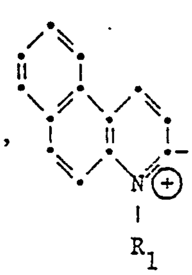

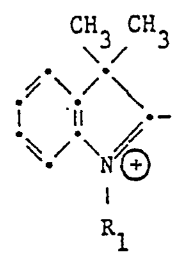, 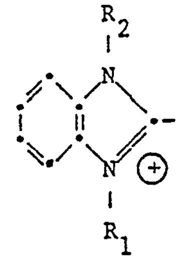, 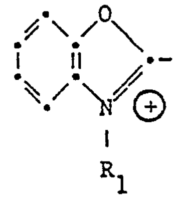, 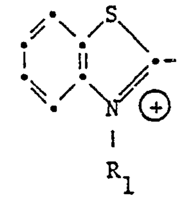

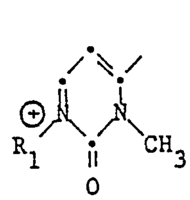, 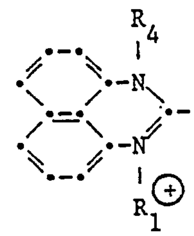, 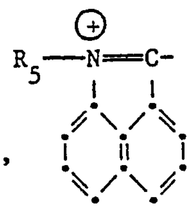 oder 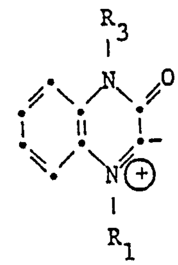

bedeutet, wobei diese Ringe neben den Substituenten $R_1$-$R_5$ noch durch Nitro, Halogen, Cyano, $C_1$-$C_4$-Alkyl, $C_1$-$C_4$-Alkoxy, Acetylamino oder Dimethylamino substituiert sein können und worin $R_1$, $R_2$, $R_3$ und $R_4$ unabhängig voneinander $C_1$-$C_8$-Alkyl, $C_2$-$C_8$-Alkenyl oder $C_3$-$C_6$-Cycloalkyl bedeuten, wobei die Alkyl-, Alkenyl- oder Cycloalkylkette durch Sauerstoff- oder Stickstoffatome unterbrochen und/oder durch Halogen, Cyano, Hydroxy, Alkoxy, Phenyl, Phenoxy, Dialkylamino, Trialkylammonium, Acetylamino, Alkylcarbonyl, Alkoxycarbonyl, Alkyl-, Phenyl- oder Benzylsulfonyl, Alkyl-, Phenyl- oder Benzylsulfonamido Alkylcarbonylamino, Benzoyl, Benzoylamino, Alkyl-, Phenyl- oder Benzylcarbamoyl, Alkyl-, Phenyl- oder Benzylcarbamoyloxy substituiert sein kann und $R_5$ für Phenyl steht oder die Bedeutung von $R_1$ hat.

12. Methinazoverbindungen nach Anspruch 11, worin A die Ergänzung zu einem der folgenden Ringe

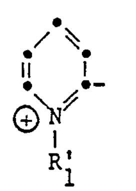, 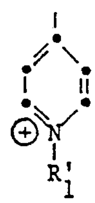, 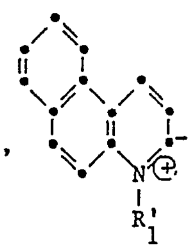, 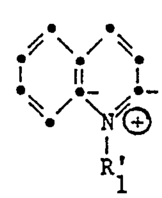, 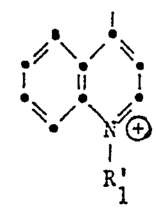

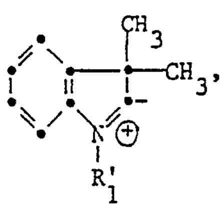, 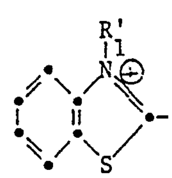 oder 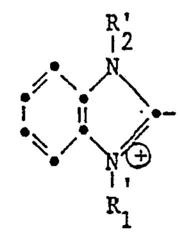

bedeutet, worin $R'_1$ und $R'_2$ unabhängig voneinander für $C_1$-$C_4$-Alkyl, Benzyl, Cyclohexyl, Hydroxyalkyl oder $C_3$-$C_4$-Alkenyl stehen und die genannten Ringe ansonsten unsubstituiert oder durch Halogen, Cyano, $C_1$-$C_4$-Alkyl, $C_1$-$C_4$-Hydroxyalkyl oder $C_1$-$C_4$-Alkoxy substituiert sind.

13. Methinazoverbindungen nach Anspruch 12, worin A die Ergänzung einem Pyridinium- oder 3,3-Dimethylindoleniniumring bedeutet, worin $R'_1$ für Methyl steht.

14. Methinazoverbindungen nach einem der Ansprüche 1 bis 13, worin KK den Rest einer Kupplungskomponente der Benzolreihe, der Naphthalinreihe, der offenkettigen, aktive Methylengruppen enthaltenden Verbindungen oder der heterocyclischen Reihe bedeutet.

15. Methinazoverbindungen nach Anspruch 14, worin KK den Rest eines(r) gegebenenfalls substituierten Phenols, Dihydroxybenzols, Anilins, Diphenylamins, Naphthols, Naphtholsulfonsäure, Dihydroxynaphthalins, Naphthylamins, Hydroxynaphthylamins, 2,6-Diamino- oder Dihydroxypyridins, Pyridons, Chinolins, Benzimidazols, Benzochinolins, Pyrimidins, Pyrimidons, Indols, Pyrazols oder eines Derivates der Acetessigsäure, Maleinsäure oder Cyanessigsäure bedeutet.

16. Methinazoverbindungen nach Anspruch 15, worin KK den Rest eines(r) gegebenenfalls substituierten Acetoacetylamids oder -esters, Pyrimidins, Pyrimidons, 8-Hydroxychinolins, Benzimidazols, Naphthols, Pyridons, Naphtholsulfonsäure, Anilins oder Dihydroxybenzols, insbesondere eines gegebenenfalls substituierten Acetoacetylamids oder -esters oder Pyridons, bedeutet.

17. Methinazoverbindungen nach Anspruch 15, worin KK den Rest einer Kupplungskomponente der folgenden Formeln bedeutet :

$$Z—CH_2—CO—CH_2—CO—R_{44},\ CH_3—CO—CH_2—CO—D—CO—CH_2—CO—CH_3,$$

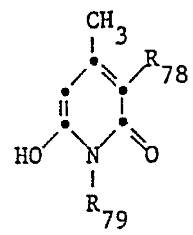
,
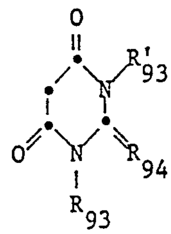
,
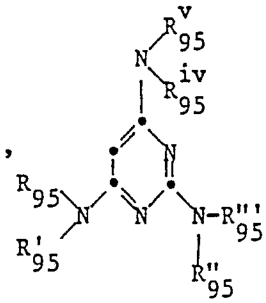

worin Z Wasserstoff, Halogen oder eine gegebenenfalls substituierte aliphatische, cycloaliphatische oder aromatische Amino- oder Ammoniumgruppe,

$R_{44}$ gegebenenfalls substituiertes Alkoxy, Benzyloxy oder Phenoxy, eine unsubstituierte oder mono- oder disubstituierte Aminogruppe, eine 5- oder 6-gliedrige cyclische gesättigte oder ungesättigte Aminogruppe,

D den Rest eines zweiwertigen aliphatischen Alkohols, eines aliphatischen Aminoalkohols, eines aliphatischen oder aromatischen Diamins, eines Aminophenols oder -naphthols, eines Dihydroxybenzols oder -naphthalins, eines Hydroxy- oder Aminobenzoesäureamids, eines Aminobenzolsulfonamids, wobei alle diese Reste gegebenenfalls durch $C_1$-$C_4$-Alkyl, $C_1$-$C_4$-Alkoxy oder Halogen substituiert sein können ;

$R_{78}$ CN, $CONH_2$ oder $SO_2NH_2$,

$R_{79}$ Wasserstoff oder gegebenenfalls substituiertes $C_1$-$C_8$-Alkyl,

$R_{93}$ und $R'_{93}$ unabhängig voneinander Wasserstoff oder $C_1$-$C_4$-Alkyl,

$R_{94}$ O oder N—CN und

$R_{95}$, $R'_{95}$, $R''_{95}$, $R'''_{95}$, $R^{iv}_{95}$ und $R^{v}_{95}$ jeweils unabhängig voneinander Wasserstoff, $C_1$-$C_4$-Alkyl, $C_2$-$C_4$-Alkenyl, Cyclopentyl, Cyclohexyl, Aryl, insbesondere Phenyl, Benzyl oder Phenäthyl bedeuten.

18. Methinazoverbindungen nach Anspruch 15, worin KK den Rest einer der folgenden Kupplungskomponenten bedeutet :

$$CH_3—CO—CH_2—CO—D'—CO—CH_2—CO—CH_3,$$

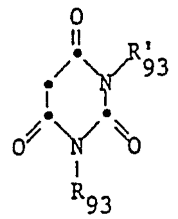
,
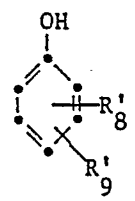
oder
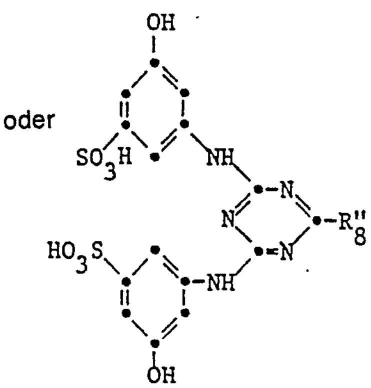

worin D' 1,4-Piperazinyl oder

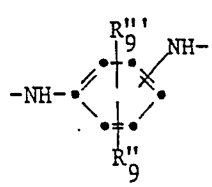
,
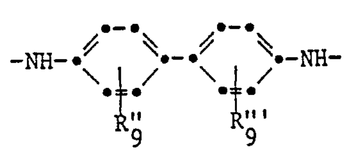
oder

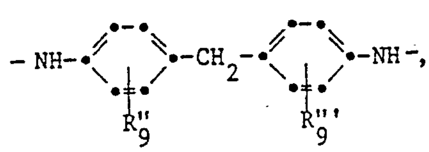
,

R″$_9$ und R‴$_9$ unabhängig voneinander jeweils Wasserstoff, $C_1$-$C_4$-Alkyl, $C_1$-$C_4$-Alkoxy oder Halogen, R′$_8$ und R′$_9$ jeweils unabhängig Wasserstoff, $C_1$-$C_4$-Alkyl, OH, $C_1$-$C_4$-Alkoxy oder Halogen, R″$_8$—NH($CH_2$)$_x$—N(Alk)$_2$, x eine Zahl von 2 bis 4, Alk $C_1$-$C_4$-Alkyl, $R_{93}$ und $R'_{93}$ unabhängig jeweils Wasserstoff oder $C_1$-$C_4$-Alkyl bedeuten.

19. Methinazoverbindungen nach einem der Ansprüche 15-18, worin A die Ergänzung zu einem der Ringe

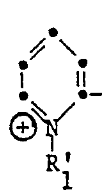 , 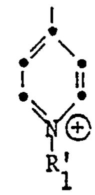 oder 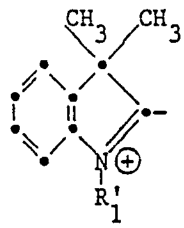

bedeutet, worin R′$_1$ unabhängig voneinander $C_1$-$C_4$-Alkyl bedeutet.

20. Verfahren zur Herstellung der in Anspruch 1 definierten Methinazoverbindungen, dadurch gekennzeichnet, dass man Methinverbindungen der Formel

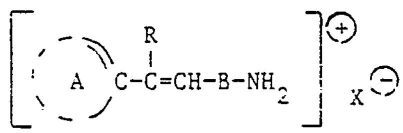

oder

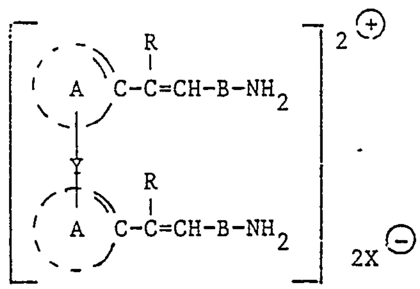

diazotiert und auf eine Kupplungskomponente HKK bzw. HKKH kuppelt oder dass man die vorstehend genannten Methinverbindungen diazotiert, auf eine Kupplungskomponente B′—$NH_2$ kuppelt, wobei für B′ die für B aufgeführten Bedeutungen gelten und wobei B und B′ gleich oder verschieden sein können, anschliessend erneut diazotiert und auf eine Kupplungskomponente HKK bzw. HKKH kuppelt.

21. Verwendung der in Anspruch 1 definierten Methinazoverbindungen als Farbstoffe zum Färben oder Bedrucken von kationisch färbbaren Substraten.

22. Verwendung nach Anspruch 21 zum Färben oder Bedrucken von Polyacrylnitrilmaterialien, sauer modifizierten Polyamid- oder Polyestermaterialien oder Baumwolle.

23. Verwendung nach Anspruch 18 zum Färben oder Bedrucken von Papier und Karton.

24. Das nach einem der Ansprüche 21-23 gefärbte oder bedruckte Material.

## Claims

1. A methine-azo compound of the formulae

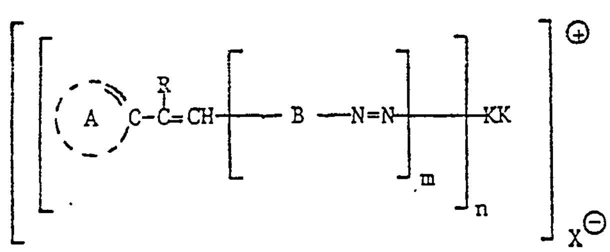 (I)

and

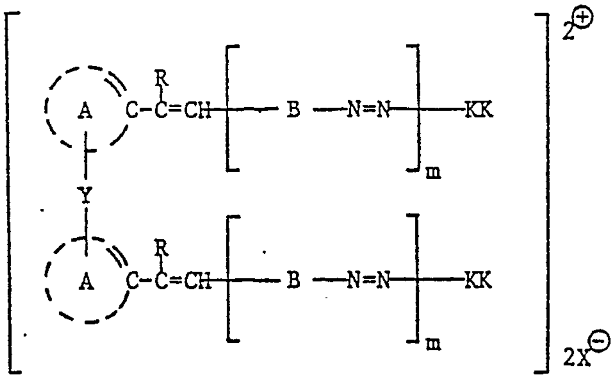

(Ia)

in which

A is the complement to a heterocyclic 5- or 6-membered ring which has a quaternised N atom as a ring member, which can contain further hetero atoms and which can be substituted and/or be fused with carbocyclic or heterocyclic rings,

R is hydrogen, cyano or $C_2$-$C_3$-alkylene which is bonded to an N atom of ring A to form a 5- or 6-membered ring,

B is substituted or unsubstituted phenylene or naphthylene,

m and n independently of each other are the numbers 1 or 2, in the formula (I) at least one of the two symbols m and n being the number 2 and where in the case m = 2 the two B's are identical or different,

KK is the radical of a coupling component

$X^{\ominus}$ is an anion and Y is a bridge member.

2. A methine-azo compound according to claim 1, in which R is hydrogen.

3. A methine-azo compound according to claim 1 or 2, in which B is phenylene, preferably 1,4-phenylene.

4. A methine-azo compound according to any one of claims 1-3, in which m is 1 and n is 2.

5. A methine-azo compound according to any one of claims 1-3, in which Y is uninterrupted or N-, O- or/and S-interrupted alkylene, alkenylene or cycloalkylene which can each be substituted, or an alkylene-phenylene-alkylene-group in which phenylene can be substituted by halogen, alkyl, alkoxy or hydroxyl.

6. A methine-azo compound according to any one of claims 1-5, in which Y joins the two rings A via the respective quaternised N atoms.

7. A methine-azo compound according to claim 5 or 6, in which Y is $C_1$-$C_8$-alkylene, $C_2$-$C_8$-alkenylene, cyclohexylene, each of which can be substituted by hydroxyl, halogen or $C_1$-$C_4$-alkoxy, $C_1$-$C_4$-alkylenephenylene-$C_1$-$C_4$-alkylene in which phenylene can be substituted by hydroxyl, methyl, methoxy or halogen, or a group of the formula

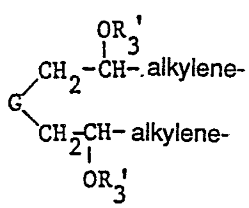

in which

$R'_3$ is hydrogen, $C_1$-$C_4$-alkyl, aralkyl or acyl and

G is

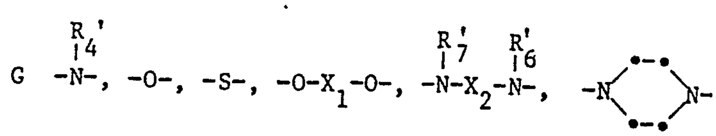

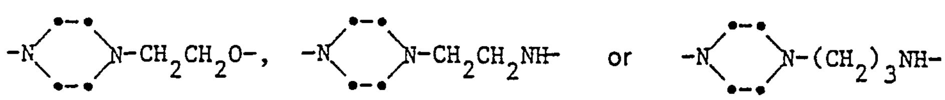

or

where

$R'_4$ is hydrogen, substituted or unsubstituted and uninterrupted or oxygen- or sulfur-interrupted $C_1$-$C_{21}$-alkyl, cycloalkyl or aralkyl,

$R'_6$ and $R'_7$, independently of each other, are substituted or unsubstituted alkyl, phenylalkyl or phenyl,

$X_1$ is uninterrupted or —COO—,

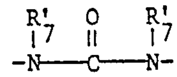

oxygen- or sulfur-interrupted alkylene or diarylenealkylene and

$X_2$ is uninterrupted or

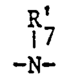

or oxygen-interrupted alkylene or diarylenealkylene.

8. A methine-azo compound according to claim 7, in which Y is $C_1$-$C_4$-alkylene,

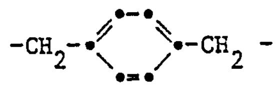

or a group of the formula

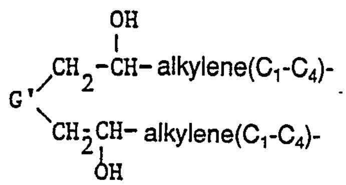

in which G' is $>N-R'_7$ where $R'_7 = C_1$-$C_8$-alkyl.

9. A methine-azo compound according to any one of claims 1-8, in which A is the complement to a quaternised pyridine, pyrimidine, quinoline, thiazole, imidazole, oxazole or pyrrole ring which can be substituted or/and be fused with carbocyclic rings.

10. A methine-azo compound according to claim 9, in which A is the complement to a quaternised pyridine ring which can be substituted or/and be fused with carbocyclic rings.

11. A methine-azo compound according to claim 9, in which A is the complement to one of the following rings

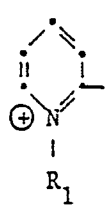, 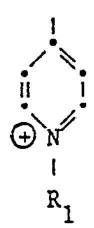, 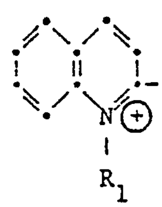, 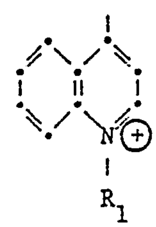, 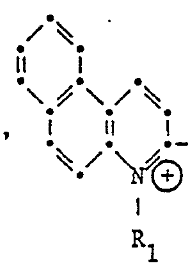

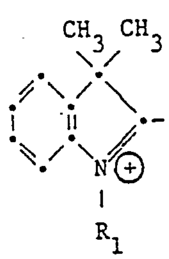, 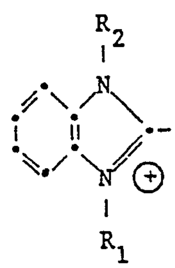, 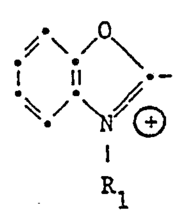, 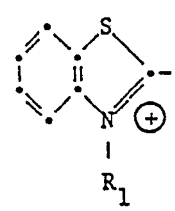

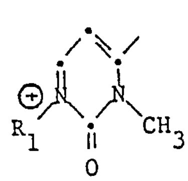, 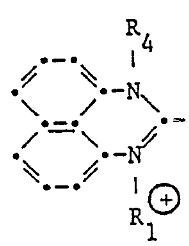, 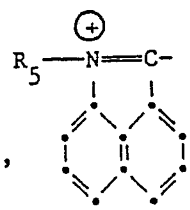 or 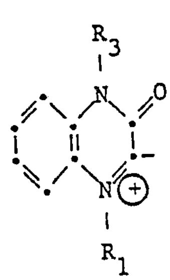

which rings may be substituted, in addition to the substituents $R_1$-$R_5$-, by nitro, halogen, cyano, $C_1$-$C_4$-alkyl, $C_1$-$C_4$-alkoxy, acetylamino or dimethylamino, and in which $R_1$, $R_2$, $R_3$ and $R_4$, independently of one another, are $C_1$-$C_8$-alkyl, $C_2$-$C_8$-alkenyl, or $C_3$-$C_6$-cycloalkyl, it being possible for the alkyl, alkenyl or cycloalkyl chain to be interrupted by oxygen or nitrogen atoms and/or be substituted by halogen, cyano, hydroxyl, alkoxy, phenyl, phenoxy, dialkylamino, trialkylammonium, acetylamino, alkylcarbonyl, alkoxycarbonyl, alkylsulfonyl, phenylsulfonyl, benzylsulfonyl, alkylsulfonamido, phenylsulfonamido, benzyl-sulfonamido, alkylcarbonylamino, benzoyl, benzoylamino, alkylcarbamoyl, phenylcarbamoyl, benzylcarbamoyl, alkylcarbamoyloxy, phenylcarbamoyloxy or benzylcarbamoyloxy, and $R_5$ is phenyl or is defined as $R_1$.

12. A methine-azo compound according to claim 11, in which A is the complement to one of the following rings

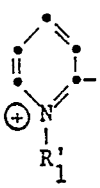 , 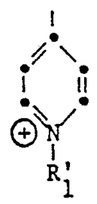 , 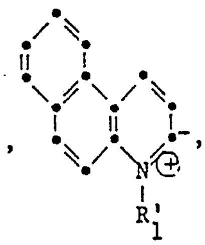 , 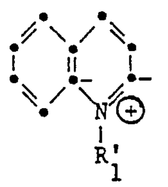 , 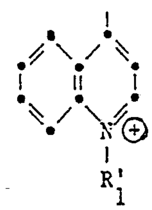

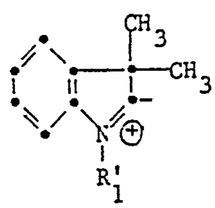 , 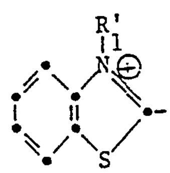 or 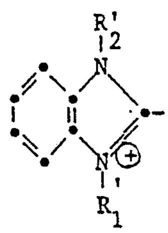

in which $R'_1$ and $R'_2$, independently of each other, are $C_1$-$C_4$-alkyl, benzyl, cyclohexyl, hydroxyalkyl or $C_3$-$C_4$-alkenyl and the stated rings are otherwise unsubstituted or substituted by halogen, cyano, $C_1$-$C_4$-alkyl, $C_1$-$C_4$-hydroxyalkyl or $C_1$-$C_4$-alkoxy.

13. A methine-azo compound according to claim 12, in which A is the complement to a pyridinium or 3,3-dimethylindolenium ring in which $R'_1$ is methyl.

14. A methine-azo compound according to any one of claims 1 to 13, in which KK is the radical of a coupling component of the benzene series, of the naphthalene series, of the open-chain compounds containing active methylene groups or of the heterocyclic series.

15. A methine-azo compound according to claim 14, in which KK is the radical of a substituted or unsubstituted phenol, of a substituted or unsubstituted dihydroxybenzene, of a substituted or unsubstituted aniline, of a substituted or unsubstituted diphenylamine, of a substituted or unsubstituted naphthol, of a substituted or unsubstituted naphtholsulfonic acid, of a substituted or unsubstituted dihydroxynaphthalene, of a substituted or unsubstituted naphthylamine, of a substituted or unsubstituted hydroxynaphthylamine, of a substituted or unsubstituted 2,6-diaminopyridine, of a substituted or unsubstituted dihydroxypyridine, of a substituted or unsubstituted pyridone, of a substituted or unsubstituted quinoline, of a substituted or unsubstituted benzimidazole, of a substituted or unsubstituted benzoquinoline, of a substituted or unsubstituted pyrimidine, of a substituted or unsubstituted pyrimidone, of a substituted or unsubstituted indole, of a substituted or unsubstituted pyrazole or of a derivative of acetoacetic acid, maleic acid or cyanoacetic acid.

16. A methine-azo compound according to claim 15, in which KK is the radical of a substituted or unsubstituted acetoacetylamide or acetoacetyl ester, of a substituted or unsubstituted pyrimidine, of a substituted or unsubstituted pyrimidone, of a substituted or unsubstituted 8-hydroxyquinoline, of a substituted or unsubstituted benzimidazole, of a substituted or unsubstituted naphthol, of a substituted or unsubstituted pyridone, of a substituted or unsubstituted naphtholsulfonic acid, of a substituted or unsubstituted aniline or, of a substituted or unsubstituted dihydroxybenzene, in particular of a substituted or unsubstituted acetoacetylamide or acetoacetyl ester or pyridone.

17. A methine-azo compound according to claim 15, in which KK is the radical of a coupling component of the following formulae :

$$Z—CH_2—CO—CH_2—CO—R_{44},\ CH_3—CO—CH_2—CO—D—CO—CH_2—CO—CH_3,$$

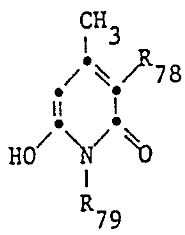 , 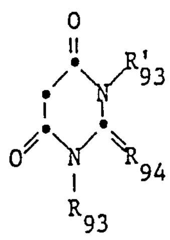 , 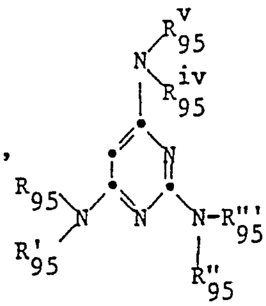

in which Z is hydrogen, halogen or a substituted or unsubstituted aliphatic, cycloaliphatic or aromatic amino or ammonium group,

$R_{44}$ is substituted or unsubstituted alkoxy, benzyloxy or phenoxy, an unsubstituted or monosubstituted or disubstituted amino group, a 5- or 6-membered cyclic saturated or unsaturated amino group,

D is the radical of a dihydric aliphatic alcohol, of an aliphatic amino alcohol, of an aliphatic or aromatic diamine, of an aminophenol, of a aminonaphthol, of an dihydroxybenzene, of a dihydroxynaphthalene, of a hydroxybenzamide, of an aminobenzamide, or of an aminobenzenesulfonamide, it be-ing possible for all these radicals to be substituted by $C_1$-$C_4$-alkyl, $C_1$-$C_4$-alkoxy or halogen ;

$R_{78}$ is CN, $CONH_2$ or $SO_2NH_2$,

$R_{79}$ is hydrogen or substituted or unsubstituted $C_1$-$C_8$-alkyl,

$R_{93}$ and $R'_{93}$, independently of each other, are hydrogen or $C_1$-$C_4$-alkyl,

$R_{94}$ is O or N—CN and

$R_{95}$, $R'_{95}$, $R''_{95}$, $R'''_{95}$, $R_{95}^{IV}$ and $R_{95}^{V}$ independently of one another, are each hydrogen, $C_1$-$C_4$-alkyl, $C_2$-$C_4$-alkenyl, cyclopentyl, cyclohexyl, aryl, in particular phenyl, benzyl or phenethyl.

18. A methine-azo compound according to claim 15, in which KK is the radical of one of the following coupling components :

$$CH_3—CO—CH_2—CO—D'—CO—CH_2—CO—CH_3,$$

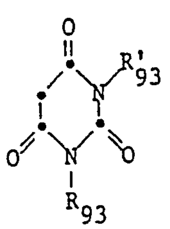 , 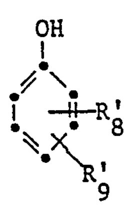 or 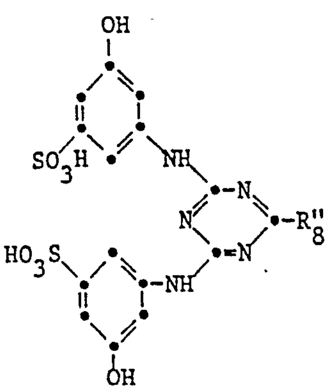

in which D' is 1,4-piperazinyl or

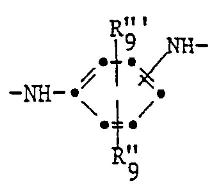 , 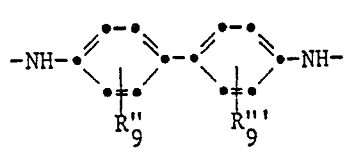 or

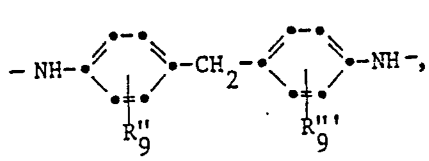

$R''_9$ and $R'''_9$, independently of each other, each are hydrogen, $C_1$-$C_4$-alkyl, $C_1$-$C_4$-alkoxy or halogen, $R'_8$ and $R'_9$, independently of each other, are hydrogen, $C_1$-$C_4$-alkyl, OH, $C_1$-$C_4$-alkoxy or halogen, $R''_8$ is $—NH(CH_2)_x—N(Alk)_2$, x is a number from 2 to 4, Alk $C_1$-$C_4$-alkyl, $R_{93}$ and $R'_{93}$, independently of each other, are hydrogen or $C_1$-$C_4$-alkyl.

19. A methine-azo compound according to any one of claims 15-18, in which A is the complement to one of the rings

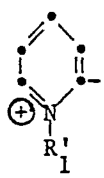, 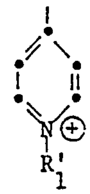 or 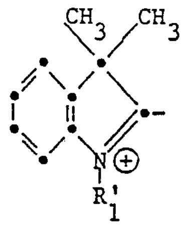

in which the $R'_1$'s independently of one another are $C_1$-$C_4$-alkyl.

20. A process for preparing the methine-azo compound defined in claim 1, which comprises diazotising a methine compound of the formula

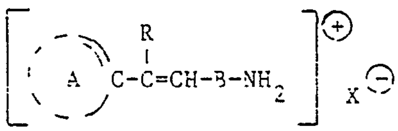

or

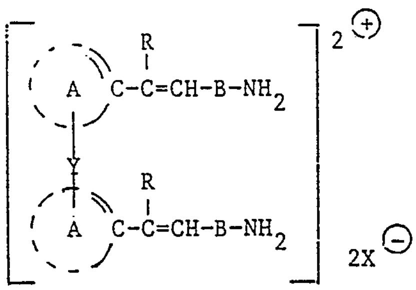

and coupling onto a coupling component HKK or HKKH, or diazotising the aforementioned methine compound, coupling onto a coupling component B'—$NH_2$, where B' is defined in the same way as B, and B and B' may be identical or different, then diazotising again, and coupling onto a coupling component HKK or HKKH.

21. Use of the methine-azo compound defined in claim 1 as a dye for dyeing or printing cationically dyeable substrates.

22. Use according to claim 21, for dyeing or printing polyacrylonitrile materials, acid-modified nylon or polyester materials or cotton.

23. Use according to claim 18 for dyeing or printing paper and board.

24. The material dyed or printed according to any one of claims 21-23.

**Revendications**

1. Composés méthine-azoïques de formules

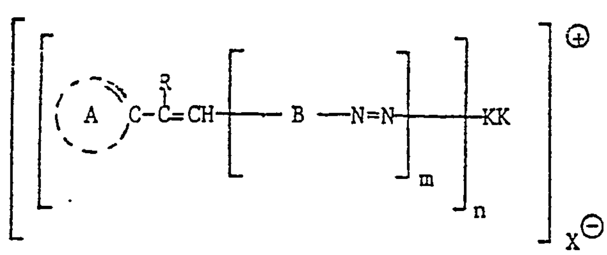

(I)

et

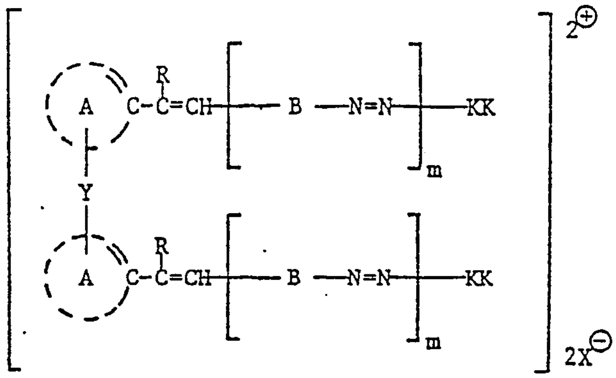

(Ia)

dans lesquelles

A représente le complément formant un cycle hétérocyclique à 5 ou 6 chaînons comportant un atome d'azote quaternaire en tant que chaînon de cycle, cycle qui peut contenir d'autres hétéroatomes et qui peut éventuellement être substitué et/ou condensé avec des cycles carbo- ou hétérocycliques ;

R représente un atome d'hydrogène ou un groupe cyano ou alkylène en $C_2$-$C_3$ qui est lié à un atome d'azote du cycle A pour former un cycle à 5 ou 6 chaînons ;

B représente un radical phénylène ou naphtylène éventuellement substitué ;

m et n représentent, indépendamment l'un de l'autre, les nombres 1 ou 2, au moins l'un des deux symboles m et n dans la formule (I) représentant le nombre 2, et, dans le cas où m vaut 2, les deux radicaux B pouvant être identiques ou différents ;

KK représente le reste d'un composant de copulation ;

$X^{\ominus}$ représente un anion et

Y représente un chaînon pontant.

2. Composés méthine-azoïques selon la revendication 1, dans lesquels R représente un atome d'hydrogène.

3. Composés méthine-azoïques selon la revendication 1 ou 2, dans lesquels B représente un radical phénylène, de préférence 1,4-phénylène.

4. Composés méthine-azoïques selon l'une des revendications 1 à 3, dans lesquels m vaut 1 et n vaut 2.

5. Composés méthine-azoïques selon l'une des revendications 1 à 3, dans lesquels Y représente un radical alkylène, alcénylène ou cycloalkylène, éventuellement interrompu par N, O et/ou S, qui est éventuellement substitué, ou un groupe -alkylène-phénylène-alkylène dans lequel le radical phénylène peut éventuellement être substitué par un halogène ou par un groupe alkyle, alcoxy ou hydroxyle.

6. Composés méthine-azoïques selon l'une des revendications 1 à 5, dans lesquels Y relie les deux cycles A par les atomes d'azote quaternaire respectifs.

7. Composés méthine-azoïques selon les revendications 5 ou 6, dans lesquels Y représente un radical alkylène en $C_1$-$C_8$, alcénylène en $C_2$-$C_8$ ou cyclohexylène, qui est éventuellement substitué par un halogène ou par un radical hydroxyle ou alcoxy en $C_1$-$C_4$, un radical alkylène($C_1$-$C_4$)-phénylène-alkylène($C_1$-$C_4$) dans lequel le reste phénylène est éventuellement substitué par un halogène ou par un groupe hydroxyle, méthyle ou méthoxy, ou un radical de formule

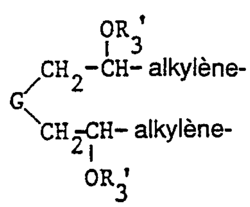

dans laquelle

$R'_3$ représente un atome d'hydrogène ou un groupe alkyle en $C_1$-$C_4$, aralkyle ou acyle, et

G représente

G 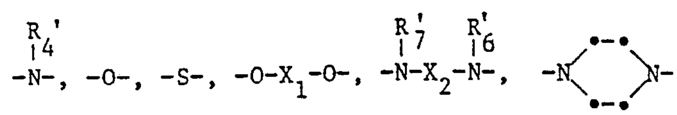

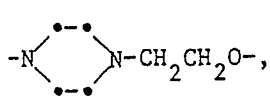, 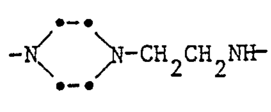 ou 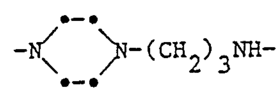

$R'_4$ représente un atome d'hydrogène ou un radical alkyle en $C_1$-$C_{21}$, cycloalkyle ou aralkyle, éventuellement substitué et éventuellement interrompu par un atome d'oxygène ou de soufre ;

$R'_6$ et $R'_7$ représentent, indépendamment l'un de l'autre, un radical alkyle, phénylalkyle ou phényle, éventuellement substitué ;

$X_1$ représente un radical alkylène ou diarylène-alkylène, éventuellement interrompu par —COO—,

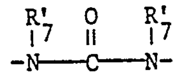

ou par un atome d'oxygène ou de soufre ; et

$X_2$ représente un radical alkylène ou diarylène-alkylène, éventuellement interrompu par

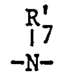

ou par un atome d'oxygène.

8. Composés méthine-azoïques selon la revendication 7, dans lesquels Y représente un radical alkylène en $C_1$-$C_4$,

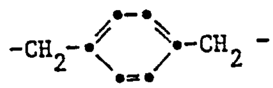

ou un groupe de formule

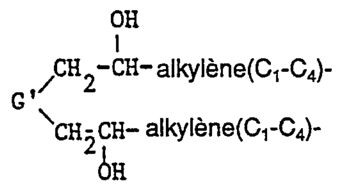

dans laquelle G' représente $>N'—R_7'$, $R_7'$ étant un groupe alkyle en $C_1$-$C_8$.

9. Composés méthine-azoïques selon l'une des revendications 1 à 8, dans lesquels A représente le complément formant un cycle pyridine, pyrimidine, quinoléine, thiazole, imidazole, oxazole ou pyrrole, rendu quaternaire, éventuellement substitué et/ou condensé avec des cycles carbocycliques.

10. Composés méthine-azoïques selon la revendication 9, dans lesquels A représente le complément formant un cycle pyridine rendu quaternaire, éventuellement substitué et/ou condensé avec des cycles carbocycliques.

11. Composés méthine-azoïques selon la revendication 9, dans lesquels A représente le complément formant l'un des cycles suivants

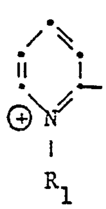 , 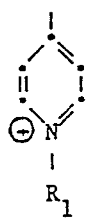 , 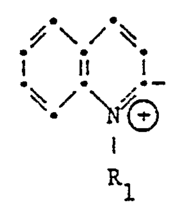 , 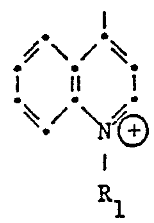 , 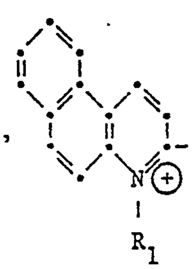

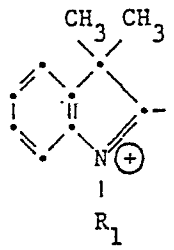 , 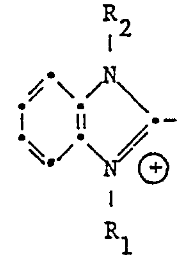 , 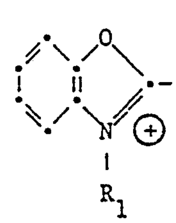 , 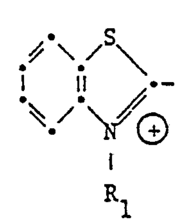

(Suite)

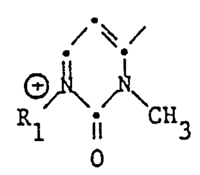 , 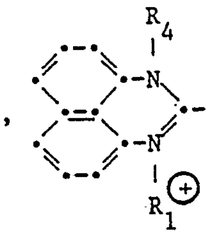 , 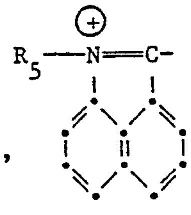 ou 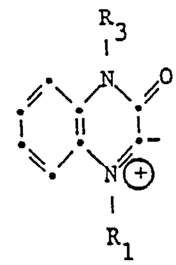

ces cycles pouvant être substitués, en plus des substituants $R_1$-$R_5$, par des halogènes ou par des groupes nitro, cyano, alkyle en $C_1$-$C_4$, alcoxy en $C_1$-$C_4$, acétylamino ou diméthylamino, et dans lesquels $R_1$, $R_2$, $R_3$ et $R_4$ représentent, indépendamment les uns des autres, un groupe alkyle en $C_1$-$C_8$, alcényle en $C_2$-$C_8$ ou cycloalkyle en $C_3$-$C_6$, la chaîne alkyle, alcényle ou cycloalkyle pouvant être interrompue par un atome d'oxygène ou d'azote, et/ou substituée par un halogène ou par un groupe cyano, hydroxyle, alcoxy, phényle, phénoxy, dialkylamino, trialkylammonium, acétylamino, alkylcarbonyle, alcoxycarbonyle, alkyl-, phényl- ou benzylsulfonyle, alkyl-, phényl- ou benzylsulfonamido, alkylcarbonylamino, benzoyle, benzoylamino, alkyl-, phényl- ou benzylcarbamoyle, alkyl-, phényl- ou benzylcarbamoyloxy, et $R_5$ représente le groupe phényle ou a la signification de $R_1$.

12. Composés méthine-azoïques selon la revendication 11, dans lesquels A représente le complément formant l'un des cycles suivants

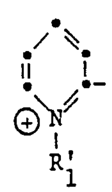 , 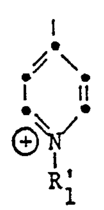 , 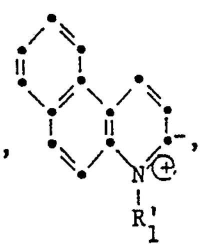 , 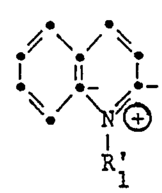 , 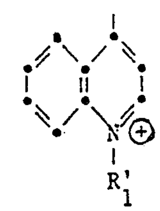

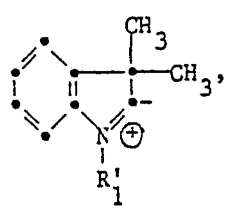 , 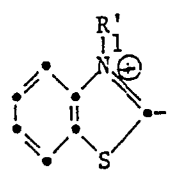 ou 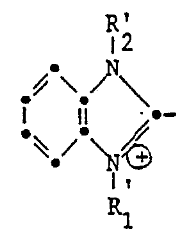

dans lesquels $R'_1$ et $R'_2$ représentent, indépendamment l'un de l'autre, un groupe alkyle en $C_1$-$C_4$, benzyle, cyclohexyle, hydroxyalkyle ou alcényle en $C_3$-$C_4$ et les cycles cités ne sont pas davantage substitués ou sont substitués par des halogènes ou par des groupes cyano, alkyle en $C_1$-$C_4$, hydroxyalkyle en $C_1$-$C_4$ ou alcoxy en $C_1$-$C_4$.

13. Composés méthine-azoïques selon la revendication 12, dans lesquels A représente le complément formant un cycle pyridinium ou 3,3-diméthylindoléninium, dans lequel $R'_1$ représente le groupe méthyle.

14. Composés méthine-azoïques selon l'une des revendications 1 à 13, dans lesquels KK représente le reste d'un composant de copulation de la série du benzène, de la série du naphtalène, de composés à chaînes ouvertes contenant des groupes méthylène actifs, ou de la série hétérocyclique.

15. Composés méthine-azoïques selon la revendication 14, dans lesquels KK représente le reste d'un(e) phénol, dihydroxybenzène, aniline, diphénylamine, naphtol, acide naphtolsulfonique, dihydroxynaphtalène, naphtylamine, hydroxynaphtylamine, 2,6-diamino- ou dihydroxypyridine, pyridone, quinoléine, benzimidazole, benzoquinoléine, pyrimidine, pyrimidone, indole, pyrazole, éventuellement substitué(e) ou d'un dérivé de l'acide acétoacétique, de l'acide maléique ou de l'acide cyanoacétique.

16. Composés méthine-azoïques selon la revendication 15, dans lesquels KK représente le reste d'un(e) acétoacétylamide ou -ester, pyrimidine, pyrimidone, 8-hydroxyquinoléine, benzimidazole, naphtol, pyridone, acide naphtolsulfonique, aniline ou dihydroxybenzène, éventuellement substitué(e), en particulier d'un acétoacétylamide ou -ester ou d'une pyridone, éventuellement substitué(e).

17. Composés méthine-azoïques selon la revendication 15, dans lesquels KK représente le reste d'un composant de copulation de formules suivantes :

$Z—CH_2—CO—CH_2—CO—R_{44}$, $CH_3—CO—CH_2—CO—D—CO—CH_2—CO—CH_3$,

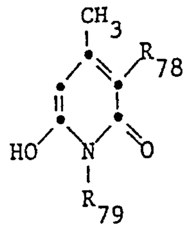 , 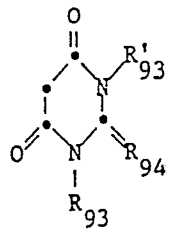 , 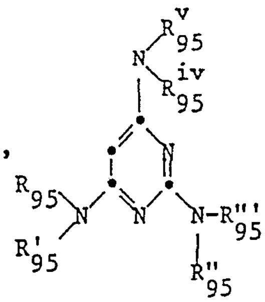

dans lesquelles Z représente un atome d'hydrogène ou d'halogène, ou un groupe amino ou ammonium aliphatique, cycloaliphatique ou aromatique, éventuellement substitué ;

$R_{44}$ représente un groupe alcoxy, benzyloxy ou phénoxy, éventuellement substitué, un groupe amino non substitué ou mono- ou disubstitué, un groupe amino cyclique à 5 ou 6 chaînons, saturé ou non saturé ;

D représente le reste d'un alcool aliphatique bivalent, d'un aminoalcool aliphatique, d'une diamine aliphatique ou aromatique, d'un aminophénol ou -naphtol, d'un dihydroxybenzène ou -naphtalène, d'un hydroxy- ou aminobenzamide, d'un aminobenzènesulfonamide, tous ces restes pouvant éventuellement être substitués par des halogènes ou par des groupes alkyle en $C_1$-$C_4$ ou alcoxy en $C_1$-$C_4$ ; et

$R_{78}$ représente CN, $CONH_2$ ou $SO_2NH_2$,

$R_{79}$ représente un atome d'hydrogène ou un groupe alkyle en $C_1$-$C_8$ éventuellement substitué ;

$R_{93}$ et $R'_{93}$ représentent, indépendamment l'un de l'autre, un atome d'hydrogène ou un groupe alkyle en $C_1$-$C_4$ ;

$R_{94}$ représente O ou N—CN ; et

$R_{95}$, $R'_{95}$, $R''_{95}$, $R'''_{95}$, $R^{iv}_{95}$ et $R^{v}_{95}$ représentent chacun, indépendamment les uns des autres, un atome d'hydrogène ou un groupe alkyle en $C_1$-$C_4$, alcényle en $C_2$-$C_4$, cyclopentyle, cyclohexyle, aryle, en particulier le groupe phényle, benzyle ou phénétyle.

18. Composés méthine-azoïques selon la revendication 15, dans lesquels KK représente le reste d'un des composants de copulation suivants :

$CH_3—CO—CH_2—CO—D'—CO—CH_2—CO—CH_3$,

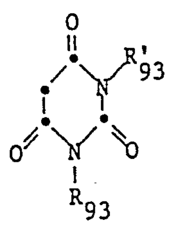 , 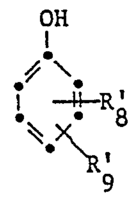 ou 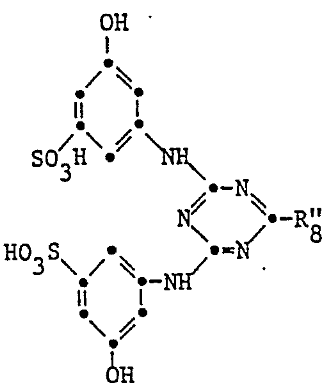

dans lesquels D' représente le groupe 1,4-pipérazinyle ou

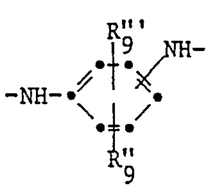 , 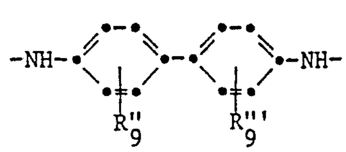 ou

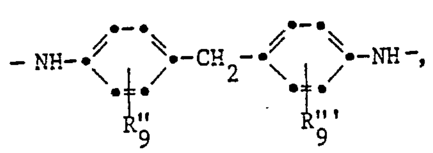 ,

R″$_9$ et R‴$_9$ représentent chacun, indépendamment l'un de l'autre, un atome d'hydrogène ou d'halogène ou un groupe alkyle en $C_1$-$C_4$ ou alcoxy en $C_1$-$C_4$ ; R′$_8$ et R′$_9$ représentent chacun, indépendamment l'un de l'autre, un atome d'hydrogène ou d'halogène ou un groupe alkyle en $C_1$-$C_4$, OH ou alcoxy en $C_1$-$C_4$ ; R″$_8$ représente un groupe $—NH(CH_2)_x—N(Alk)_2$, x étant un nombre valant de 2 à 4 et alk étant un groupe alkyle en $C_1$-$C_4$ ; $R_{93}$. et R′$_{93}$ représentent chacun, indépendamment l'un de l'autre, un atome d'hydrogène ou un groupe alkyle en $C_1$-$C_4$.

19. Composés méthine-azoïques selon l'une des revendications 15 à 18, dans lesquels A représente le complément formant l'un des cycles

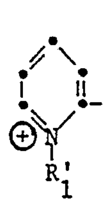 , 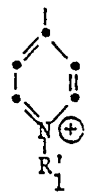 ou 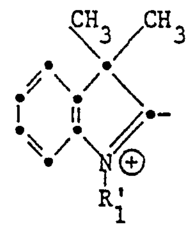

sans lesquels les radicaux R′$_1$ représentent, indépendamment les uns des autres, un groupe alkyle en $C_1$-$C_4$.

20. Procédé pour la préparation des composés méthine-azoïques définis dans la revendication 1, caractérisés en ce que l'on soumet à une diazotation des composés méthine de formule

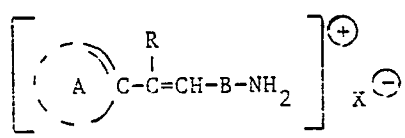

ou

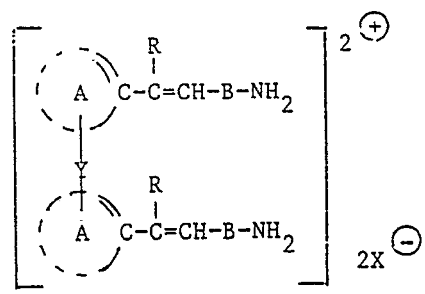

et on les fait copuler sur un composant de copulation HKK ou HKKH, ou en ce que on soumet à une diazotation les composés méthine précités et on les fait copuler sur un composant de copulation B′—NH$_2$, B′ ayant les significations données pour B, et B et B′ pouvant être identiques ou différents, puis on les soumet à une nouvelle diazotation et on les fait copuler sur un composant de copulation HKK ou HKKH.

21. Utilisation des composés méthine-azoïques définis dans la revendication 1, en tant que colorants pour la teinture ou l'impression de substrats aptes à être teints avec des colorants cationiques.

22. Utilisation selon la revendication 21, pour la teinture ou l'impression de matériaux en polyacrylonitrile, de matériaux en polyamide ou polyester à modification acide, ou du coton.

23. Utilisation selon la revendication 21, pour la teinture ou l'impression du papier et du carton.

24. Le matériau teint ou imprimé selon l'une des revendications 21 à 23.